# EUROPEAN PATENT SPECIFICATION

(11) **EP 4 404 022 B1**
(45) Date of publication and mention of the grant of the patent: **25.02.2026**
(21) Application number: 23782724.1
(22) Date of filing: 31.03.2023
(51) Int. Cl.: B25J 9/16, B66F 9/06, G05B 19/418

(54) **AUTOMATIC DRIVING WORKING METHOD AND APPARATUS FOR ENGINEERING MACHINE, ELECTRONIC DEVICE, AND SYSTEM**
VERFAHREN UND VORRICHTUNG ZUR AUTOMATISCHEN FAHRBEARBEITUNG FÜR EINE BAUMASCHINE, ELEKTRONISCHE VORRICHTUNG UND SYSTEM
PROCÉDÉ ET APPAREIL DE FONCTIONNEMENT DE CONDUITE AUTOMATIQUE POUR MACHINE D'INGÉNIERIE, DISPOSITIF ÉLECTRONIQUE ET SYSTÈME

(30) Priority: 07.12.2022 CN 202211561028
(43) Date of publication of application: 24.07.2024
(73) Proprietor: Shenzhen Haixing Zhijia Technology Co., Ltd., Shenzhen, Guangdong 518110 (CN)
(72) Inventor: WANG, Faping, Shenzhen, Guangdong 518110 (CN); HE, Minzheng, Shenzhen, Guangdong 518110 (CN); LI, Xiawei, Shenzhen, Guangdong 518110 (CN); LIU, Yinglin, Shenzhen, Guangdong 518110 (CN); JIANG, Bo, Shenzhen, Guangdong 518110 (CN)
(74) Representative: Puchberger & Partner Patentanwälte
(86) International application number: PCT/CN2023/085624
(87) International publication number: WO 2024/119678

(56) References cited:
- CN-A- 110 781 165
- CN-A- 113 570 727
- CN-A- 114 546 383
- CN-A- 115 220 787
- CN-A- 115 576 331
- US-A1- 2019 258 724
- US-B1- 6 868 413
- SMEETS HUGUES ET AL: "Demonstration abstract: A lightweight, portable device with integrated USB-Host support for reprogramming wireless sensor nodes", IPSN-14 PROCEEDINGS OF THE 13TH INTERNATIONAL SYMPOSIUM ON INFORMATION PROCESSING IN SENSOR NETWORKS, IEEE, 15 April 2014 (2014-04-15), pages 333 - 334, XP032613183, ISBN: 978-1-4799-3146-0, [retrieved on 20140630], DOI: 10.1109/IPSN.2014.6846789
- LIAN YINDONG ET AL: "A Novel Multi-Warehouse Mobile Robot Hierarchical Scheduling Strategy Based on Industrial Cyber-Physical System", 2021 4TH IEEE INTERNATIONAL CONFERENCE ON INDUSTRIAL CYBER-PHYSICAL SYSTEMS (ICPS), IEEE, 10 May 2021 (2021-05-10), pages 263 - 269, XP033937312, DOI: 10.1109/ICPS49255.2021.9468144
- SACCHI NIKOLAS ET AL: "Scenario-Based Collision Avoidance Control with Deep Q-Networks for Industrial Robot Manipulators", 2021 60TH IEEE CONFERENCE ON DECISION AND CONTROL (CDC), IEEE, 14 December 2021 (2021-12-14), pages 4388 - 4393, XP034074616, DOI: 10.1109/CDC45484.2021.9683056

## Description

### Cross-Reference to Related Applications

The present application claims the priority to the Chinese patent application No. 202211561028.3 filed to the China Patent Office on December 7, 2022, and entitled "Automatic Driving Operating Method and Apparatus for Construction Machinery, Electronic Device and System".

### Technical Field

The present application relates to the technical field of construction machinery, in particular to an automatic driving operating method and apparatus for construction machinery, an electronic device and a system.

### Background

Construction machinery is replicating successful practice of intelligent networking development in passenger cars. For the construction machinery, a goal of intelligent networking is to achieve automatic driving operating in a closed/semi-closed scenario. Different from the passenger cars, the automatic driving operating of the construction machinery has characteristics such as individual differences in different machinery, cost sensitivity, and unique usage and running scenarios. At present, an on-device computing platform, as a decision-making and control center of the automatic driving operating of the construction machinery, is customized, that is, personalized solutions are provided for specific types of construction machinery equipment, special use scenarios, clearly specified functions, etc. For example, computing platforms with special functions are developed for excavator excavation operating in mines, horizontal transportation of flatbed trolleys in ports, goods loading and unloading by a forklift in logistics parks, etc. Software and hardware of such computing platforms developed in a customized manner are highly coupled and cannot be migrated, replicated, and used. If a universal computing platform is developed according to the above thought, that is, customized development followed by modification to meet using requirements of different scenarios and functions under different models, this will lead to a very cumbersome and complex computing platform in an entire software and hardware system, thereby posing great challenges to scale application, on-site deployment, and cost control. An automatic driving operating method is shown in the prior art document SMEETS HUGUES ET AL: "Demonstration abstract: A lightweight, portable device with integrated USB-Host support for reprogramming wireless sensor nodes", IPSN-14 PROCEEDINGS OF THE 13TH INTERNATIONAL SYMPOSIUM ON INFORMATION PROCESSING IN SENSOR NETWORKS, IEEE, 15 April 2014 (2014-04-15), pages 333-334. A cyber-physical systems to control warehouse schedulings are disclosed in LIAN YINDONG ET AL: "A Novel 1-15 Multi-Warehouse Mobile Robot Hierarchical Scheduling Strategy Based on Industrial Cyber-Physical System", 2021 4TH IEEE INTERNATIONAL CONFERENCE ON INDUSTRIAL CYBER-PHYSICAL SYSTEMS (ICPS), IEEE, TECHNICAL FIELDS SEARCHED (IPC) 10 May 2021 (2021-05-10), pages 263-269. Deep Reinforcement Learning (DRL) approaches for robot manipulators are disclosed in SACCHI NIKOLAS ET AL: "Scenario-Based 1-15 Collision Avoidance Control with Deep Q-Networks for Industrial Robot Manipulators", 2021 60TH IEEE CONFERENCE ON DECISION AND CONTROL (CDC), IEEE, 14 December 2021 (2021-12-14), pages 4388-4393.

### Summary

In view of this, embodiments of the present application provide an automatic driving operating method and apparatus for construction machinery, an electronic device and a system as defined in the appended set of claims, so as to solve at least one of the problems of cumbersome and complex system design, inflexible on-site deployment, high manufacturing and maintenance costs, and difficulty in lightweight of a universal on-device computing platform.

According to a first aspect, an embodiment of the present application provides an automatic driving operating method for construction machinery as set out in the appended set of claims.

According to a second aspect, an embodiment of the present application provides an automatic driving operating apparatus for construction machinery as set out in the appended set of claims.

According to a third aspect, an embodiment of the present application provides an electronic device, including: a memory and a processor, which are in communication connection with each other, wherein the memory stores computer instructions, and the processor executes the automatic driving operating method for the construction machinery described in the first aspect or any implementation in the first aspect by executing the computer instructions.

According to a fourth aspect, an embodiment of the present application provides a computer readable storage medium, the computer readable storage medium stores computer instructions, and the computer instructions are used to cause a computer to execute the automatic driving operating method for the construction machinery described in the first aspect or any implementation in the first aspect.

According to a fifth aspect, an embodiment of the present application provides an intelligent networked collaborative driving operating system for construction machinery, including:
at least one on-device computing platform of a construction machinery, configured to execute the automatic driving operating method for the construction machinery described in the first aspect or any implementation in the first aspect; and
a target server, in communication connection with the at least one on-device computing platform of the construction machinery, and configured to update a target intelligent inference model based on environmental information collected by each construction machinery and driving operating control result data, and issue an updated target intelligent inference model to the construction machinery corresponding to the target intelligent inference model.

According to the automatic driving operating method for the construction machinery provided in the embodiment of the present application, in a process that the construction machinery executes an operating task, when service scenario switching is detected, the corresponding target service scenario is determined, so that the construction machinery can be controlled by utilizing the service operational logic under the target service scenario, through scenario dynamic management, different service states throughout the entire process can be automatically analyzed, and the service operational logics corresponding to the demands of the service scenarios are dynamically switched. There is no need to stop running of the construction machinery during scenario switching to redeploy and select the application programs. Only one time of deployment before the official start of work can meet demands of real-time changes of various scenarios subsequently, thereby improving processing efficiency of the on-device computing platform, and thus improving the efficiency of the automatic driving operating of the construction machinery. On the other hand, the computing platform can adapt to different service scenarios without the need for customized development, thereby improving generalization ability of the computing platform. At the same time, for the on-device computing platform, the target application programs under various service scenarios are generated only when running in the various service scenarios, rather than having the plurality of target application programs generated for backup before startup, thereby reducing pressure on computing platform storage resources and achieving the lightweight on-device computing platform.

### Brief Description of Figures

In order to illustrate specific implementations of the present application or technical solutions in the prior art more clearly, drawings needing to be used in description of the specific implementations or the prior art will be introduced below briefly. Apparently, the drawings in the description below are some implementations of the present application, and those skilled in the art can further obtain other drawings according to these drawings without inventive efforts.
Fig. 1 is a structural block diagram of an intelligent networked collaborative driving operating system for construction machinery according to an embodiment of the present application.
Fig. 2 is a schematic diagram of an application scenario of an intelligent networked collaborative driving operating system for construction machinery according to an embodiment of the present application.
Fig. 3 is a flow chart of an automatic driving operating method for construction machinery according to an embodiment of the present application.
Fig. 4 is a schematic diagram of service scenario switching according to an embodiment of the present application.
Fig. 5 is a flow chart of an automatic driving operating method for construction machinery according to an embodiment of the present application.
Fig. 6 is a schematic diagram of node assembling according to an embodiment of the present application.
Fig. 7 is a schematic diagram of calling an Al inference model by an application program during running according to an embodiment of the present application.
Fig. 8 is a flow chart of an automatic driving operating method for construction machinery according to an embodiment of the present application.
Fig. 9 is a flow chart of an automatic driving operating method for construction machinery according to an embodiment of the present application.
Fig. 10 is a schematic diagram of an operating scenario setting interface according to an embodiment of the present application.
Fig. 11 is a schematic diagram of a scenario function setting interface according to an embodiment of the present application.
Fig. 12 is a structural block diagram of an automatic driving operating apparatus for construction machinery according to an embodiment of the present application.
Fig. 13 is a schematic diagram of a hardware structure of an electronic device provided by an embodiment of the present application.

### Detailed Description

In order to make objectives, technical solutions and advantages of embodiments of the present application clearer, the technical solutions in the embodiments of the present application will be described below clearly and completely with reference to drawings in the embodiments of the present application. Apparently, the described embodiments are part of the embodiments of the present application, but not all the embodiments. All other embodiments obtained by those skilled in the art based on the embodiments in the present application without creative efforts shall fall within the protection scope of the present application.

An automatic driving operating method for construction machinery provided by an embodiment of the present application is used to perform automatic driving operating control on the construction machinery, for example, an unmanned forklift in an operating area of a logistics park is controlled, a flatbed trolley in an operating area of a smart wharf is controlled, or cluster scheduling control is performed on various types of construction machinery in a joint operating area of a smart mine, etc. Types of the controlled construction machinery are not limited here, and are specifically set according to actual needs.

The automatic driving operating method for the construction machinery provided by the embodiment of the present application is a lightweight unmanned driving operating method for the construction machinery. From a hardware point of view of the construction machinery, a computing platform used to undertake a command and control hub function of the unmanned driving operating is installed on the construction machinery. Before running, the computing platform may be considered as a "semi-finished product", on which a basic framework of upper-level service application software and underlying system software are deployed. This "semi-finished product" is basic and universal and may be applied to different scenarios of different construction machinery equipment types, and software and hardware may further be expanded according to the increase of scenario functions. Before the construction machinery officially enters into a working state, the upper-level service application software running on the computing platform needs to be globally configured according to the application scenario. In the present application, for the convenience of explanation and understanding, an entire global scenario of an entire process is referred to as an application scenario, and small specific subdivision scenarios are referred to as service scenarios. For example, a forklift executes an automatic driving operating task in a logistics park, the entire process of forking goods-traveling-unloading goods-charging is referred to as the global scenario, and the overall task is referred to as an application task. Looking at the subdivision scenario of forking the goods separately, the process of identifying a pallet, aligning a fork with a socket, and lifting the fork is referred to as the service scenario, and this subdivision and relatively independent task is referred to as a scenario task. The main purpose of global configuration is to set an operational logic of the upper-level service software program on the computing platform in advance during official work, including the number of subroutines to run, an order of subroutine startup, a data transmission relationship between the subroutines, which algorithm plugin to choose by the subroutines, and which Al inference model to embed in the algorithm plugin. A configuration process of the application software may be implemented in a target server. After completing the global configuration of the construction machinery application scenario, the target server issues a global configuration file including global configuration information of the upper-level application service software to an on-device computing platform of a construction machinery. Correspondingly, the on-device computing platform of the construction machinery performs the corresponding automatic driving operating control based on the configuration file, thereby realizing an automatic driving operating function and completing the application task; or, global configuration may be directly performed on the on-device computing platform of the construction machinery to realize the automatic driving operating control function and complete the application task.

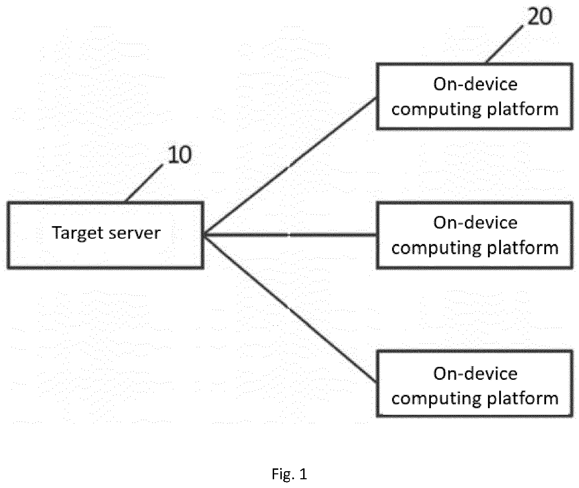

An embodiment of the present application provides an intelligent networked collaborative driving operating system for construction machinery, as shown in Fig. 1, the system includes a target server 10 and at least one on-device computing platform of a construction machinery 20, and the target server 10 is in communication connection with the at least one on-device computing platform of the construction machinery. The functional realization of the intelligent networked collaborative driving operating system mainly relies on the on-device computing platform of construction machinery, including its hardware and software, and also uses a remote/cloud high-capacity and high-computing-capacity target server as an auxiliary device. Among them, the on-device computing platform of the construction machinery is used to execute the automatic driving operating method for the construction machinery described in the embodiment of the present application, while the remote/cloud target server is used to store various algorithm plugins, interface files, Al models, etc. required for generating a construction machinery automatic driving operating application program, the remote/cloud target server is further used to provide global information such as the application scenario and a global map required for the automatic driving operating of the construction machinery, and is further used to update a target intelligent inference model based on environmental information collected by various construction machinery and driving operating control result data, and issue the updated target intelligent inference model to the construction machinery corresponding to the target intelligent inference model, for example, be responsible for pruning, distilling, quantifying the lightweight intelligent inference model, and retraining and pushing the intelligent inference model based on data returned back by the construction machinery. Certainly, the above descriptions are only some common effects supported by the target server and do not limit the scope of protection of the present application. In the embodiment of the present application, the target server may further be used to assist the on-device computing platform in computing and processing complex data when running the automatic driving operating program.

The target server 10 may be deployed on an edge cloud or a public cloud, and may be set according to actual needs. For example, the edge cloud (i.e., an edge cloud server) may be deployed in scenarios such as an open-pit mine, an underground metal mine, and a remote logistics park that cannot be effectively covered by a 5G signal, while the public cloud (i.e., a central cloud server) may be directly used in scenarios such as a port, a wharf, and an urban park that can be effectively covered by the 5G signal.

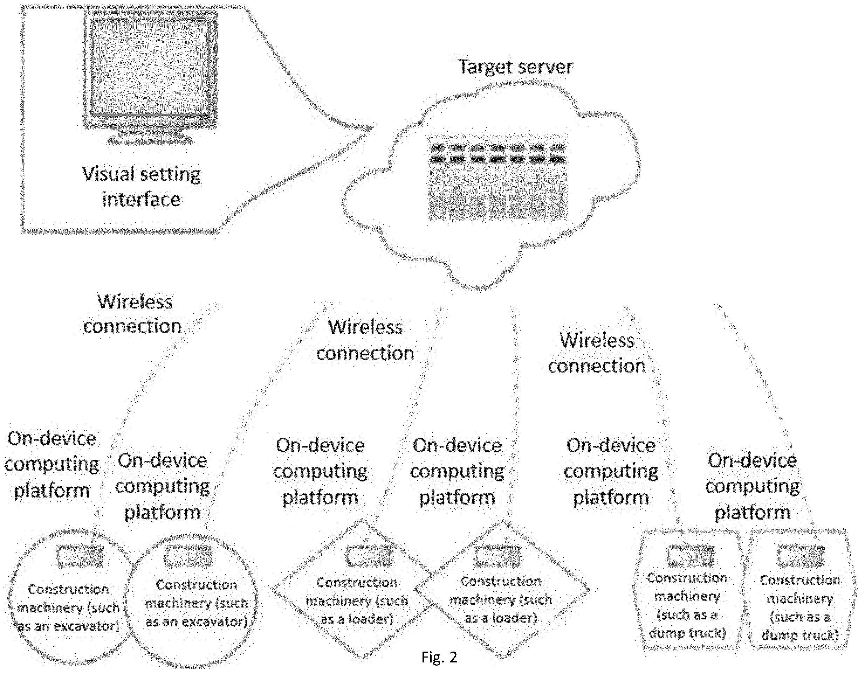

Types of the construction machinery include, but are not limited to, an excavator, a loader, a flatbed trolley, a crane, a dump truck, an unmanned forklift, etc. Fig. 2 shows an optional implementation of the intelligent networked collaborative driving operating system for the construction machinery in the embodiment of the present application. As shown in Fig. 2, a display device is arranged on the target server, a visual setting interface is displayed on the display device for global configuration of each construction machinery, and a global configuration file that records a global configuration result is issued onto the on-device computing platform of the construction machinery in a mode such as wireless connection. The on-device computing platform serves as a domain controller for the automatic driving operating function of the construction machinery, and performs the corresponding automatic driving operating control on the construction machinery based on the configuration result issued by the target server.

The intelligent networked collaborative driving operating system for the construction machinery provided by the embodiment of the present application implements automatic driving operating control on the construction machinery through collaborative cooperation between the target server and the construction machinery. For the target server, it is responsible for performing processing, such as updating the target intelligent inference model based on the environmental information collected by each construction machinery, including state information of the construction machinery itself and driving operating control result data; and for the construction machinery, it is responsible for performing intelligent inference on the collected data and performing automatic driving operating control on the construction machinery based on an inference result. Both of them perform their respective duties and cooperate with each other to implement the automatic driving operating of the construction machinery. Works such as training, optimization, and updating of the intelligent inference model are undertaken by the server, which greatly reduces the occupation of software and hardware resources on the on-device computing platform of the construction machinery, and provides a condition for the lightweight development and design of a general computing platform.

According to the embodiment of the present application, an embodiment of an automatic driving operating method for construction machinery is provided. It should be noted that steps shown in a flow chart in the drawings may be executed in a computer system such as a set of computer executable instructions, and although a logical sequence is shown in the flow chart, in some cases, the steps shown or described may be executed in an order different from the order described here.

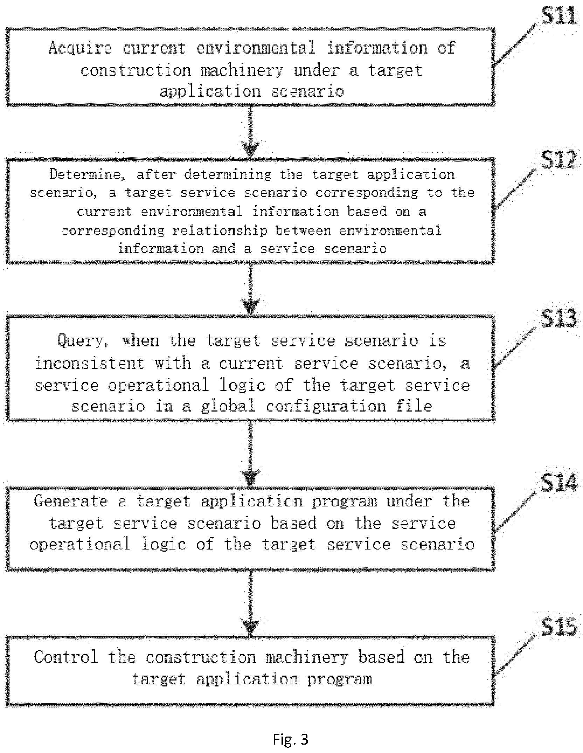

In the present embodiment, an automatic driving operating method for construction machinery is provided, and may be used for the above on-device computing platform of the construction machinery. Fig. 3 is a flow chart of the automatic driving operating method for the construction machinery according to the embodiment of the present application, as shown in Fig. 3, the flow includes the following steps:
S11, current environmental information of construction machinery under a target application scenario is acquired.

The construction machinery collects the current environmental information under the target application scenario in real time for automatic driving operating, that is, based on a service operational logic corresponding to a current service scenario, the computing platform determines an upper-level service application software operational logic to perform the automatic driving operating control on the construction machinery. For example, the current service scenario is automatic charging within a charging area. Correspondingly, to complete automatic charging, the service operational logic that needs to be run includes environmental perception fusion, path planning for a forklift to reach a charging predetermined area, automatic driving control of the forklift, control of a plug automatically connected with a socket, etc. In a running process, the computing platform determines that an upper-level service applies an environmental perception sensor arranged on the construction machinery to collect environmental perception data according to the above service operational logic, and the collected environmental perception data is processed by an environmental perception fusion program and then transmitted to a path planning program. The path planning program obtains decision planning data and then transmits it to a driving control program, and the environmental perception fusion data will further be transmitted by the environmental perception fusion program to a socket connection control program to realize automatic charging.

In the automatic driving operating process of the construction machinery, an environmental sensor collects the current environmental information in real time. During initialization of the construction machinery, after completing a current application task, or after interruption and restart, the environmental sensor will also collect the current environmental information. The current environmental information includes, but is not limited to, position information, radar feature information, and image feature information. For example, a positioning device is arranged on the construction machinery, and current position information is collected in real time through the positioning device; or, an image collecting device is arranged on the construction machinery, and current image information is collected in real time through the image collecting device.

S12, after determining the target application scenario, a target service scenario corresponding to the current environmental information is determined based on a corresponding relationship between environmental information and a service scenario.

The corresponding relationship between the environmental information and the service scenario may be that: the service scenario corresponds to an operating area, a position of the operating area is fixed, and therefore, a corresponding relationship between the position of the operating area and the service scenario may be established. For example, in a global scenario of the entire process, one operating task includes three service scenarios, namely a service scenario A, a service scenario B, and a service scenario C, and it is defined that an area 1 corresponds to the service scenario A, an area 2 corresponds to the service scenario B, and an area 3 corresponds to the service scenario C. The positions of the area 1 to the area 3 can be determined based on the environmental position information, such as coordinates in a global coordinate system. Based on this, after collecting the current position information and under a condition of clarifying the currently-located global scenario, namely, the application task to be currently executed by the construction machinery, the target service scenario corresponding to the current position information can be determined by querying the corresponding relationship recorded in the global configuration file. Clarifying the currently-located global scenario may be realized by requiring the target server to refresh and issue cluster scheduling task instructions, and comparing the current application task with a newly-issued application task.

Or, the corresponding relationship between the environmental information and the service scenario may be that: for a starting point and an end point, corresponding image feature information is set; and for a walking path, corresponding position information is set. For example, one operating task is goods carrying, which needs to carry goods from a starting point A to an end point B. For identification of the service scenario of the starting point A and the end point B, it may be that the image collecting device collects current image feature information and compares the current image feature information with image feature information of the starting point or end point stored in the global configuration file, so as to determine whether the current service scenario is the starting point or the end point. In a process of determining the starting point or the end point, the current position information may also be collected simultaneously, and combined with the current image feature information and the current position information, the target service scenario to which the construction machinery currently belongs may be determined.

As mentioned above, the target environmental information includes the target position information and/or the target image feature information. Based on this, S12 above includes: determining the target service scenario corresponding to the current environmental information based on a corresponding relationship between the image feature information and the service scenario; and/or, determining a current service scenario corresponding to the current image feature information based on the corresponding relationship between the image feature information and the service scenario.

Determining the target service scenario through the position and/or image feature information can ensure reliability of the determined target service scenario.

S13, when the target service scenario is inconsistent with the current service scenario, a service operational logic of the target service scenario in the global configuration file is queried.

Global configuration result information in the global configuration file includes at least one service scenario under the target application scenario, a service operational logic of each service scenario, and a logical relationship between the service scenarios.

It should be noted that the target service scenario refers to a service scenario in which it should be currently located. For example, the construction machinery walks in the area 1 at a time t1, the target service scenario is the service scenario A at this time, and automatic driving operating control is performed on the construction machinery based on a service operational logic of the service scenario A; and the construction machinery walks in the area 2 at a time t2, and the target service scenario is the service scenario B at this time. Through comparison, it is determined that switching in the service scenario has occurred. At this time, it is necessary to read the service operational logic of the service scenario B from the global configuration file and switch the service operational logic of the construction machinery automatic driving operating from the service operational logic corresponding to the service scenario A to the service operational logic corresponding to the service scenario B, thereby achieving automatic switching of the service operational logics, so as to adapt to the switching of the service scenarios. The above example describes that the target service scenario and the currently-located service scenario belong to the same global scenario, that is, the switching of the service operational logics caused by the switching of the service scenarios when the application tasks to be executed by the construction machinery do not change. In some cases, the switching of the service operational logics is caused by global scenario switching. For example, at the time t1, the construction machinery executes an application task A in a global scenario A, at this time, the target service scenario is the service scenario A under the global scenario A, and automatic driving operating control is performed on the construction machinery based on the service operational logic of the service scenario A. At the time t2, the construction machinery has already executed an application task B in the global scenario, and at this time, the target service scenario is the service scenario B under a global scenario B. In this case, the service operational switching process is to first find the global configuration file of the application task A, read the service operational logic of the service scenario B from the global configuration file of the application task A, and switch the service operational logic of the construction machinery automatic driving operating from the service operational logic corresponding to the service scenario A to the service operational logic corresponding to the service scenario B.

The global configuration file is generated by performing global configuration on the construction machinery before it is officially put into use. The entire configuration process includes setting at least one application scenario, the corresponding service scenarios for each application scenario, and the service operational logic of each service scenario. A specific global configuration record under each application scenario is stored in the corresponding global configuration file. Based on this, because the service scenarios corresponding to different operating scenarios and the service operational logic of each service scenario are set in the global configuration file, after determining the application scenario, using the target application scenario for querying can determine the at least one service scenario under the target application scenario and the service operational logic of each service scenario.

S14, a target application program under the target service scenario is generated based on the service operational logic of the target service scenario.

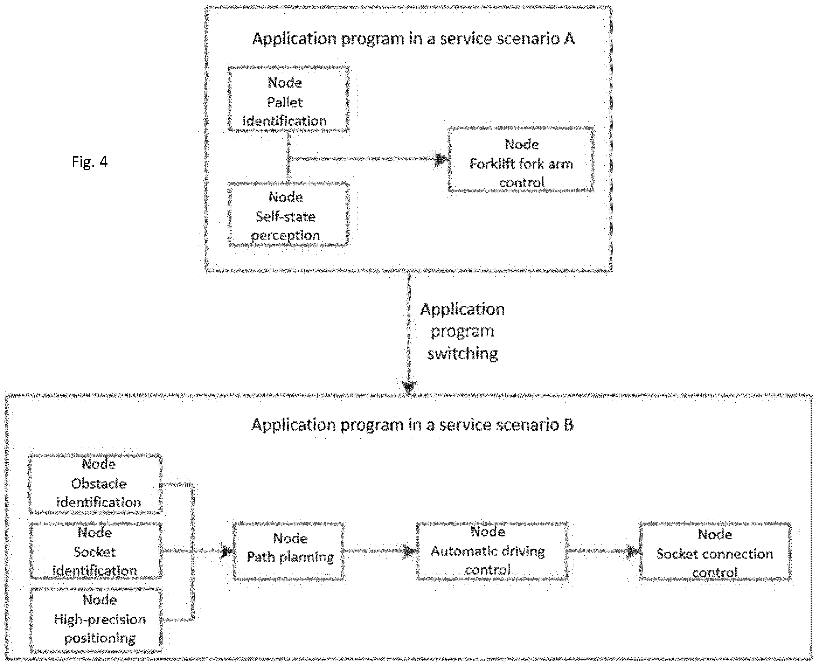

Due to the fact that only some configuration information is recorded in the global configuration file, a running process of the construction machinery requires the target application program, and the automatic driving operating control on the construction machinery can only be achieved by using these target application programs. Based on this, the on-device computing platform needs to query description information of the service operational logic of the target service scenario from the global configuration file. For example, the service scenario A is forklift loading, then its service operational logic is to identify a pallet, control a fork arm to descend, and then control the fork arm to ascend after determining that the pallet is forked, and an organizational structure form of the application program corresponding to the service scenario A, namely, a data flow of software nodes in the application program is shown in the figure. The service scenario B is forklift automatic charging, its service operational logic is to identify surrounding obstacles and a socket in a charging area, plan a path of a forklift from the starting point to the charging predetermined area, control automatic driving of the forklift and control automatic connection of a plug to the socket. When the service scenario where the construction machinery is located switches from the service scenario A to the target service scenario B, the organizational structure form of the application program should also undergo corresponding switching, as shown in Fig. 4. The application program is formed by several software nodes organized together in a predetermined logical order. The software nodes are composed of an algorithm plugin and a base, and the algorithm plugin includes its embedded intelligent inference model. So, generating the target application program is to reassemble the software nodes according to the service operational logic. Switching from the current application program to the target application program includes generating new software nodes, changing a connection relationship between the software nodes, and so on. S15, the construction machinery is controlled based on the target application program.

After generating the target application program, the computing platform controls the automatic driving operating of the construction machinery by running the application program, and executes the application task specified in the global configuration.

According to the automatic driving operating method for the construction machinery provided by the present application, in a process that the construction machinery executes the operating task, when service scenario switching is detected, the corresponding target service scenario is determined, so that the service operational logic under the target service scenario can be used to generate the target application program for performing automatic driving operating control on the construction machinery. Through scenario dynamic management, different service states throughout the entire process under the global scenario may be automatically analyzed, the service operational logic required by the corresponding service scenario is dynamically switched, and the required application program is switched. There is no need to stop running of the construction machinery during scenario switching to redeploy and select the application program. Only one time of deployment before the official start of work can meet demands of real-time changes of various scenarios subsequently, thereby improving processing efficiency of the on-device computing platform, and thus improving the efficiency of the automatic driving operating of the construction machinery. On the other hand, the computing platform can adapt to different service scenarios without the need for customized development, thereby improving generalization ability of the computing platform. At the same time, for the on-device computing platform, the target application programs under various service scenarios are generated only when running in the various service scenarios, rather than having the plurality of target application programs generated for backup before startup, thereby reducing pressure on computing platform storage resources and achieving the lightweight on-device computing platform.

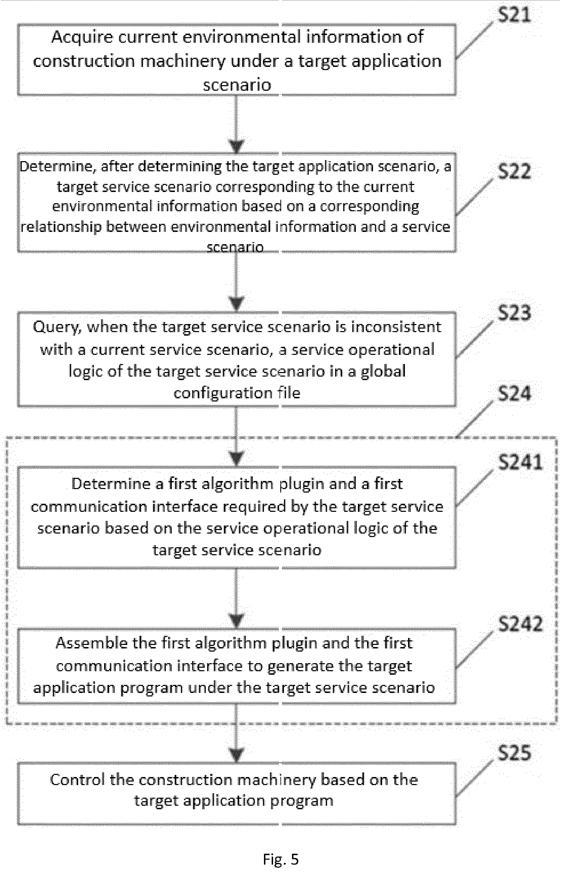

In the present embodiment, an automatic driving operating method for construction machinery is provided, and may be used for the above on-device computing platform of the construction machinery. Fig. 5 is a flow chart of the automatic driving operating method for the construction machinery according to the embodiment of the present application, and as shown in Fig. 5, the flow includes the following steps:

S21, current environmental information of construction machinery under a target application scenario is acquired.

Please refer to S11 of the embodiment shown in Fig. 3 for details, which will not be repeated here.

S22, after determining the target application scenario, a target service scenario corresponding to the current environmental information is determined based on a corresponding relationship between environmental information and a service scenario.

Please refer to S12 of the embodiment shown in Fig. 3 for details, which will not be repeated here.

S23, when the target service scenario is inconsistent with a current service scenario, a service operational logic of the target service scenario in a global configuration file is queried.

The global configuration file includes at least one service scenario under the target application scenario, a service operational logic of each service scenario, and a logical relationship between the service scenarios.

Please refer to S13 of the embodiment shown in Fig. 3 for details, which will not be repeated here.

S24, a target application program under the target service scenario is generated based on the service operational logic of the target service scenario. Specifically, S24 above includes:
S241, a first algorithm plugin and a first communication interface required by the target service scenario are determined based on the service operational logic of the target service scenario.

As mentioned above, description information of the service operational logic is recorded in the global configuration file, and the first algorithm plugin and the first communication interface required by the target service scenario may be determined by using the description information. The first algorithm plugin is used to implement corresponding functions, such as image identification, forklift arm ascending or descending, etc. The first communication interface is used to realize a communication connection between the first algorithm plugins.

S242, the first algorithm plugin and the first communication interface are assembled to generate the target application program under the target service scenario.

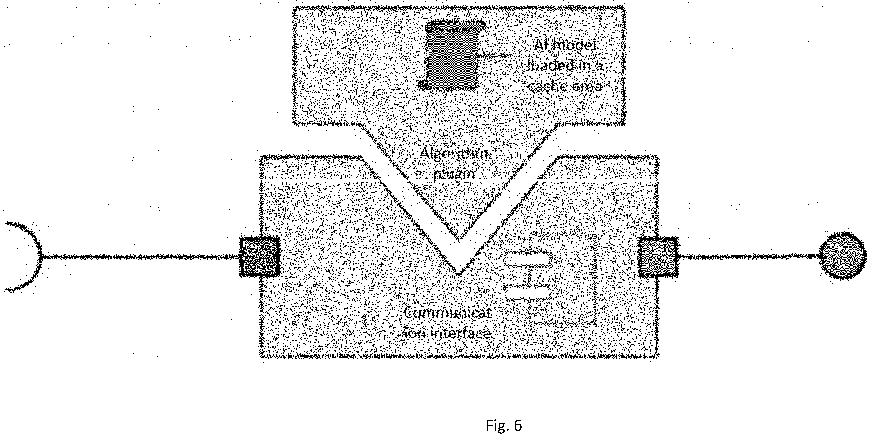

As shown in Fig. 6, the assembly of the first algorithm plugin and the first communication interface relies on the service operational logic of the target service scenario, and nodes are obtained by fusing the first algorithm plugin with the corresponding first communication interface. Communication links are established between the nodes in an order described by the service operational logic, and are organized together, so as to obtain the target application program under the target service scenario.

According to the description information of the service operational logic recorded in the global configuration file, when the first algorithm plugin is embedded with an intelligent inference model, the computing platform requests a cloud server to issue a model file of the intelligent inference model and load it in a cache area of an Al inference engine for calling by the application program.

In some implementations, S242 above includes:
(1) acquiring a current application program under the current service scenario, the current application program being obtained by assembling a second algorithm plugin and a second communication interface; and
(2) adjusting, based on a difference between a current service operational logic under the current service scenario and the service operational logic of the target service scenario, the current application program by using the first algorithm plugin and the first communication interface to determine the target application program. When the first algorithm plugin that relies on the intelligent inference model exists, the adjusting further includes: performing adjustment of the intelligent inference model on the first algorithm plugin that relies on the intelligent inference model.

When generating the target application program, it is obtained by creating, deleting, or updating on the basis of the current application program. Specifically, the current application program under the current service scenario is acquired, that is, the second algorithm plugin, the second communication interface, and a communication connection relationship between them are learned. Then the current operational logic under the current service scenario is compared with the service operational logic of the target service scenario to identify the difference, that is, determine which algorithm plugins need to be adjusted, and then the current application program is adjusted by using the first algorithm plugin and the first communication interface, so as to determine the target application program.

When the first algorithm plugin is implemented by relying on the intelligent inference model, it is also necessary to acquire which intelligent inference model the first algorithm plugin relies on, and then the acquired information is used to perform adjustment of the intelligent inference model on the first algorithm plugin.

It should be noted that the algorithm plugin required by generating the target application program and the Al model file corresponding to the plugin may be issued by the target server to the on-device computing platform at a global configuration phase, and may also be issued on demand by the target server requested by the on-device computing platform in real time after determining the target service scenario. On-demand issue can achieve the lightweight on-device computing platform.

S25, the construction machinery is controlled based on the target application program.

Please refer to S15 of the embodiment shown in Fig. 3 for details, which will not be repeated here.

The automatic driving operating method for the construction machinery provided by the present embodiment is to assemble the target application program in real time according to the demands of the target service scenario in a motion process of the construction machinery, rather than implementing assembly before startup. That is, assembly is performed on demand, and the algorithm plugin, interface file, and intelligent inference model required by assembling are not always stored on the on-device computing platform in the preferred embodiment, but are acquired on demand from the target server when the application program needs to switch and reassemble, which can ensure the lightweight storage of the on-device computing platform. On the other hand, the intelligent inference model file is loaded into the cache area on demand at an application program assembly phase through the Al inference engine, the application program may directly call a corresponding intelligent inference result at any time, instead of acquiring the model file and loading it when needed, which increases a running speed of this computing platform and also reflects the lightweight of the computing platform.

In some implementations, the above method further includes:
(1) acquiring initial environmental information when the construction machinery starts;
(2) determining an actual initial service scenario corresponding to the initial environmental information based on a corresponding relationship between the environmental information and the service scenario;
(3) verifying the actual initial service scenario by using an initial service scenario in the application scenario;
(4) issuing alarm reminder when the verifying fails to pass; and
(5) performing automatic driving operating control on the construction machinery based on the initial environmental information when the verifying passes.

When the construction machinery starts, the initial environmental information is acquired through a collecting device, and then the actual initial service scenario corresponding to the initial environmental information is determined by using the corresponding relationship. The actual initial service scenario here refers to an initial service scenario of the construction machinery during actual running. In order to distinguish it from the initial service scenario in the application scenario, the actual initial service scenario is used for description.

After the actual initial service scenario is determined, the actual initial service scenario is verified by using the initial service scenario in the application scenario, so as to determine whether the actual initial service scenario is consistent with the initial service scenario. If not, it indicates that the verifying fails to pass, and the alarm reminder is issued at this time to remind a user that manual intervention is needed to handle the problem at this time.

When the construction machinery starts, the initial service scenario and the actual initial service scenario are used for verifying to ensure the reliability of the actual initial service scenario of the construction machinery, that is, to determine whether the starting point of the construction machinery is accurate, thereby providing an accurate starting condition for subsequent automatic control based on the application scenario.

When the verifying passes, it indicates that the starting point at which the construction machinery starts is correct. Based on this, the initial service scenario is determined by using the initial environmental information to achieve automatic driving operating control on the construction machinery.

In some implementations, S25 above includes:
(1) acquiring, when the first algorithm plugin is implemented relying on a target intelligent inference model, input data of the target intelligent inference model;
(2) loading a model file of the target intelligent inference model based on an intelligent inference engine so as to infer the input data and determine an inference result; and
(3) performing automatic driving operating control based on the inference result.

As mentioned above, functional implementation of the first algorithm plugin may need to be realized through the intelligent inference model. Based on this, in order to represent the specific implementation of a functional algorithm module implemented through the intelligent inference model, the intelligent inference model of the first algorithm plugin will be referred to as the target intelligent inference model hereinafter. Furthermore, the on-device computing platform of the construction machinery is implemented through the intelligent inference engine, and the intelligent inference engine cooperates with the target intelligent inference model to achieve intelligent inference on the construction machinery side and determine the inference result.

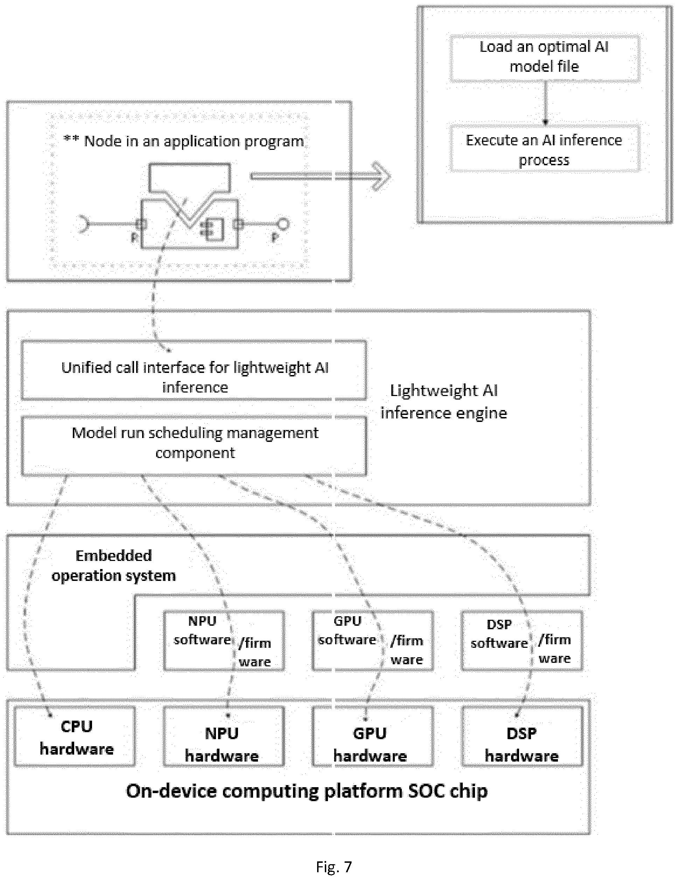

Specifically, if a function of a current functional algorithm module is implemented through the target intelligent inference model, it is necessary to first acquire the input data of the target intelligent inference model, and use the intelligent inference engine to call the model file of the target intelligent inference model, so as to process the input data. The input data may be collected by a sensor on the construction machinery, and may also be output of other intelligent inference models, or output of other functional algorithm modules, etc. There is no restriction on its source, which specifically depends on a position of the target intelligent inference model in the service operational logic of the application scenario, that is, a module to which input of the target intelligent inference model is connected. As shown in Fig. 7, the Al inference engine is responsible for executing the Al inference process. The application program itself does not execute the inference process, but directly calls the inference result obtained by the Al inference engine and performs automatic driving operating control on the construction machinery based on the inference result. The Al inference engine calls underlying software and hardware resources according to a preset rule to load and run the model file at the minimum cost to execute the inference process, and returns the inference result to the application program through a unified interface. If the plurality of Al models need to be loaded and run at the same time so as to execute the inference process, the Al inference engine will further perform centralized scheduling management on the execution of the inference process. For example, on a multi-core heterogeneous computing platform that includes multiple hardware computing processing units such as a CPU, a GPU, an NPU and a DSP, the Al inference engine will schedule different computing units to execute the Al inference process based on features of different Al models during running according to the rule set in advance. The application program is insensitive to underlying scheduling management of the Al inference engine, and it only calls the required inference result from the unified interface provided by the Al inference engine for its own use.

The input data is processed based on the intelligent inference engine and the target intelligent inference model. As the target intelligent inference model is issued by the target server to the construction machinery on demand, only this target intelligent inference model needs to be called for processing on the construction machinery side. The corresponding functions can be achieved without the need for complex preprocessing operations such as model pruning and distillation, model quantification, model training, and model file conversion, thereby reducing requirements for software and hardware capabilities of the on-device computing platform, and improving the work efficiency of the construction machinery. On the other hand, the Al inference engine is responsible for executing the inference process, and the application program itself does not run the inference model but only calls the inference result, which greatly reduces complexity of the application program in terms of time and space during running. The Al inference engine helps the application program shield the impact of differences in underlying software and hardware architectures, in this way, the application program may only focus on the upper-level service applications themselves, thereby laying the foundation for lightweight development and design of the application program.

In some implementations, above step (2) includes: loading, when the updated target intelligent inference model issued by the target server is acquired, a model file of the updated target intelligent inference model based on the intelligent inference engine so as to infer the input data and determine the inference result. The updated target intelligent inference model is determined by the target server after training the target intelligent inference model based on environmental information collected by each construction machinery and driving operating control result data.

The target intelligent inference model set in the target server is obtained by training empirical data and accumulated data in the past, which can meet the needs of the construction machinery under a new operating scenario. However, at the beginning, both operating performance and operating efficiency will not be the highest. As the on-device computing platform of the construction machinery (the lightweight Al inference engine) returns measurement data back to the target server in a non-real-time mode, the target server then re-optimizes and trains it to obtain the updated target intelligent inference model, and pushes the updated target intelligent inference model to the on-device computing platform of the construction machinery (the lightweight Al inference engine), and ultimately, the operating performance and operating efficiency of the construction machinery under this scenario are continuously improved.

The environmental information collected by each construction machinery and the driving operating control result data are used as new sample data to retrain the target intelligent inference model, which can further improve precision of the target intelligent inference model and its compatibility with the current service scenario.

As mentioned above, the training and updating of the intelligent inference model are all completed on the target server side. Based on this, in the operating process of the construction machinery, if the updated target intelligent inference model issued by the target server is received, the updated target intelligent inference model is used to replace the target intelligent inference model, and motion control is performed based on the updated target intelligent inference model.

Regarding the update of the target intelligent inference model, please refer to the previous section, which will not be repeated here.

The update of the target intelligent inference model is completed on the target server side. For the entire inference process, through collaborative division of labor between the target server and the construction machinery, lightweight Al inference on the construction machinery side is achieved, which improves the operating efficiency of the construction machinery while ensuring the low cost and lightweight of the computing platform.

In some implementations, determining the global configuration file is based on a scenario feature of a target scenario map of the target application scenario.

The target scenario map has its own inherent features, and these features may be identification of the name of the target scenario map, image identification of the target scenario map, and so on. When the same construction machinery operates in different scenario maps, the functions that need to be executed are not all the same. Due to the relatively single operating scenario of the construction machinery, the functions it needs to execute can be obtained through an exhaustive mode. Based on this, by determining the target scenario map of the target application scenario, the corresponding service scenario can be determined in the future.

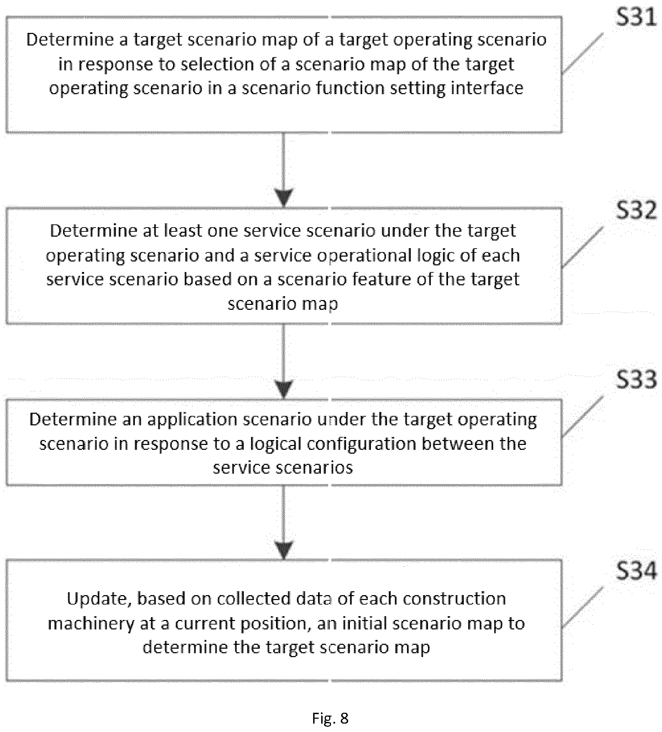

By setting the service scenarios corresponding to the different operating scenarios and the service operational logic of each service scenario, the service operational logic of each service scenario is used to represent an operating action required to be executed for implementing the service scenario. After determining the scenario features, the scenario features are matched to determine the global configuration file under the target application scenario. As mentioned above, the global configuration file may be obtained from a response configuration operation of the on-device computing platform or from a response configuration operation of the target server, which is not limited here and may be specifically set according to actual needs. When configuration is performed in the target server, cluster scheduling control of the plurality of construction machinery can be achieved. As shown in Fig. 8, a mode for determining the global configuration file includes:
S31, the target scenario map of the target application scenario is determined in response to selection of a scenario map of the target application scenario in a scenario function setting interface.

The scenario function setting interface is used for global configuration of the construction machinery, an identifier of each construction machinery is displayed on the interface, and the scenario function setting interface corresponding to the corresponding construction machinery may be entered by selecting the identifier. A user interacts with the scenario function setting interface to select the scenario map of the target application scenario. For example, by clicking on a selection tag of the scenario map, alternative scenario maps are displayed in a pull-down menu, including, but not limited to indoor space, a port, a mine, a logistics park, an open area, and so on.

It should be noted that scenario map data obtained by the user interacting with the scenario function setting interface is an initial state of the corresponding scenario, and with the help of this scenario map data, the corresponding construction machinery can start intelligent operating. Then the state of the corresponding scenario will continue to change in the work process of the construction machinery. At this time, the scenario map data is modified and improved by relying on the collected data returned back by the construction machinery, and is pushed to the corresponding construction machinery to obtain the target scenario map.

The reason why the target scenario map needs to be obtained here is that the scenario map can be shared by various construction machinery passing through the same operating area, and the scenario feature of the scenario map can also represent the operating scenario. Therefore, the scenario map is uniformly managed and updated by the target server, and the updated scenario map is issued to each construction machinery to realize the universality of the scenario map, reduce data processing capacity of the construction machinery, and further realize determination of the target application scenario.

S32, the at least one service scenario under the target application scenario and the service operational logic of each service scenario are determined based on the scenario feature of the target scenario map.

Due to the fact that the service scenarios corresponding to the different operating scenarios and the service operational logic of each service scenario are set in the target server, the target application scenario is identified through the scenario features of the target scenario map, and the at least one service scenario under the target application scenario and the service operational logic of each service scenario may be determined by querying through the target application scenario.

The service operational logic of the service scenario may be implemented through the intelligent inference model. In the target server, the intelligent inference model corresponding to each construction machinery is trained in advance. If the service operational logic of the service scenario is implemented through the intelligent inference model, the model file of the intelligent inference model is extracted from the target server and issued to the construction machinery.

S33, the global configuration file under the target application scenario is determined in response to a logical configuration between the service scenarios.

Each service scenario under the target application scenario is obtained in S32 above, and how these service scenarios are connected requires user interaction settings. The user establishes a connection relationship between these service scenarios through interactive processing, so as to implement the logical configuration between the service scenarios. The connection relationship between these service scenarios may be represented in a mode of one-way graph data, or in a mode of a data linked list, or in other modes, which is not limited here.

After obtaining the connection relationship between the service scenarios, the service operational logic of the service scenario is associated with the corresponding service scenario to form the application scenario under the target application scenario. This application scenario is a complete operating flow of the construction machinery under the target application scenario and the specific implementation mode of each operating flow node.

The different scenario maps may be selected for configuring the service operational logic of the service scenario, or the service operational logic of the different service scenarios may be configured under the same scenario map, so as to obtain the different global configuration files under the different application scenarios.

S34, based on collected data of each construction machinery at a current position, the initial scenario map is updated to determine the target scenario map.

In an operating process of the construction machinery, the target server receives collected data from each construction machinery within the operating area at the current position to update the initial scenario map. Certainly, the collected data received by the target server is not limited to position information, but may also include image data collected by each construction machinery, which is not limited here. Because the position of each construction machinery dynamically changes within the operating area, the scenario map data within the operating area is also dynamic correspondingly. The target server receives the data uploaded by each construction machinery and continuously updates the scenario map to ensure the accuracy of the obtained target scenario map. The target scenario map not only includes a static target within the scenario, but also includes a dynamic target.

At this point, the target scenario map and the application scenario under the target application scenario are obtained in the target server. The target scenario map is provided for path planning of the construction machinery, and the application scenario is used to be provided for operating control of the construction machinery. The target server issues the obtained target scenario map and the application scenario to the target construction machinery together, so that the target construction machinery performs motion control based on both. A specific control mode for the target construction machinery will be described in detail below.

Due to the relatively simple operating scenario of the construction machinery, the corresponding service scenario is obtained by identifying the scenario feature, and correspondingly, the application scenario under the target application scenario may be formed and issued to the construction machinery for motion control. For the target server, determination of the application scenario may be achieved through simple interaction, thereby improving operating efficiency.

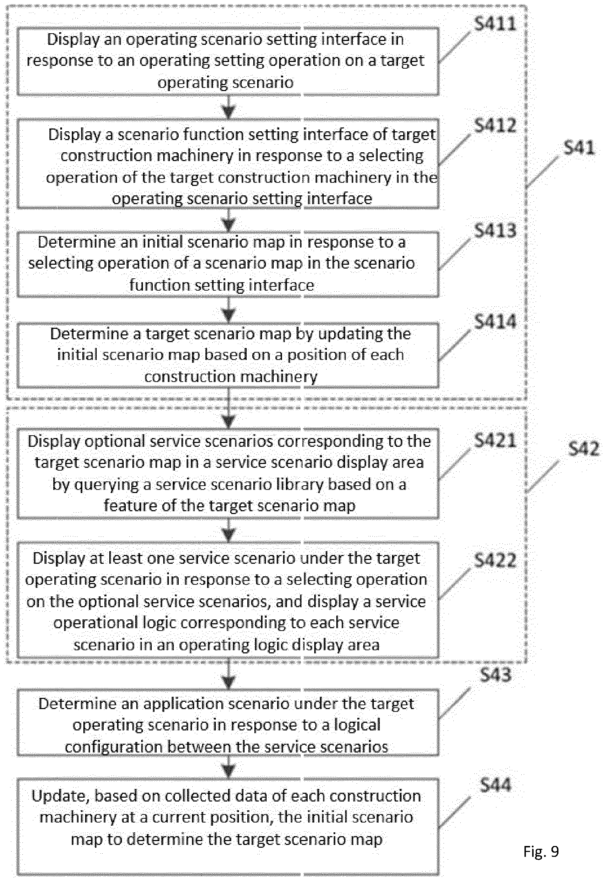

In some implementations, as shown in Fig. 9, a mode for determining the global configuration file includes the following steps:
S41, the target scenario map of the target application scenario is determined in response to selection of a scenario map of the target application scenario in a scenario function setting interface.

Specifically, S41 above includes:
S411, the operating scenario setting interface is displayed in response to an operating setting operation on the target application scenario.

The operating scenario setting interface includes an operating area of the target application scenario and a position of each construction machinery within the operating area.

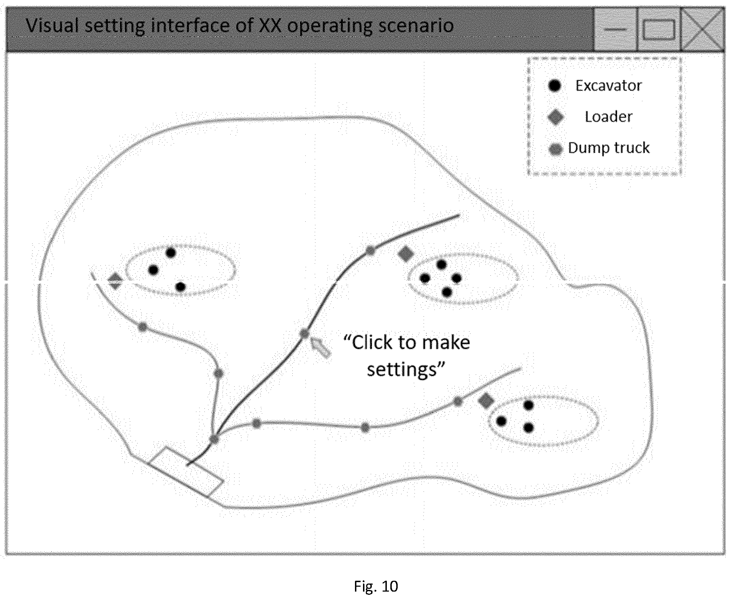

When it is necessary to perform operating setting on the construction machinery in the target application scenario, the user triggers the target server to display the operating scenario setting interface by interacting with a setting tag/button in the target server. As shown in Fig. 10, the operating scenario setting interface contains a top view outline of the operating area, a top view outline of internal operating points in the area, a top view of a transportation route, and abstract points of the construction machinery. The entire top view rendering will be dynamically updated based on measurement data information returned back by each piece of construction machinery equipment, while position information of the construction machinery is updated in real time. Fig. 10 shows three types of construction machinery, namely an excavator, a loader and a dump truck. As mentioned above, the map data of the operating area displayed here is initial map data, which aims at enabling the construction machinery to start and run, in the operating process of the construction machinery, the construction machinery will return the collected data back to the target server, and the target server updates the map data within the operating area based on the data returned back by each construction machinery.

S412, a scenario function setting interface of the target construction machinery is displayed in response to a selecting operation of the target construction machinery in the operating scenario setting interface.

Various types of construction machinery (for example, containing M excavators, N loaders, L dump trucks, etc.) in the operating scenario are all deployed with on-device computing platforms, and each on-device computing platform is in communication connection with the target server in a wireless connection mode. The wireless connection mode is not limited to 4G/5G communication, for example, in certain operating scenarios, the on-device computing platform may be wirelessly connected with an edge cloud server through wifi. After establishing a connection between the on-device computing platform and the target server, the position information and movement speed information of the construction machinery in the operating scenario, and information of other collaboratively-working construction machinery in the surrounding may be updated in real time and displayed on the operating scenario setting interface.

Through the above operating scenario setting interface, on the one hand, monitoring information of dynamic scenarios is presented, and on the other hand, the intelligent functions running on the on-device computing platform of the construction machinery, and the upper-level application software service operational logic are remotely set, and new Al model file data is pushed.

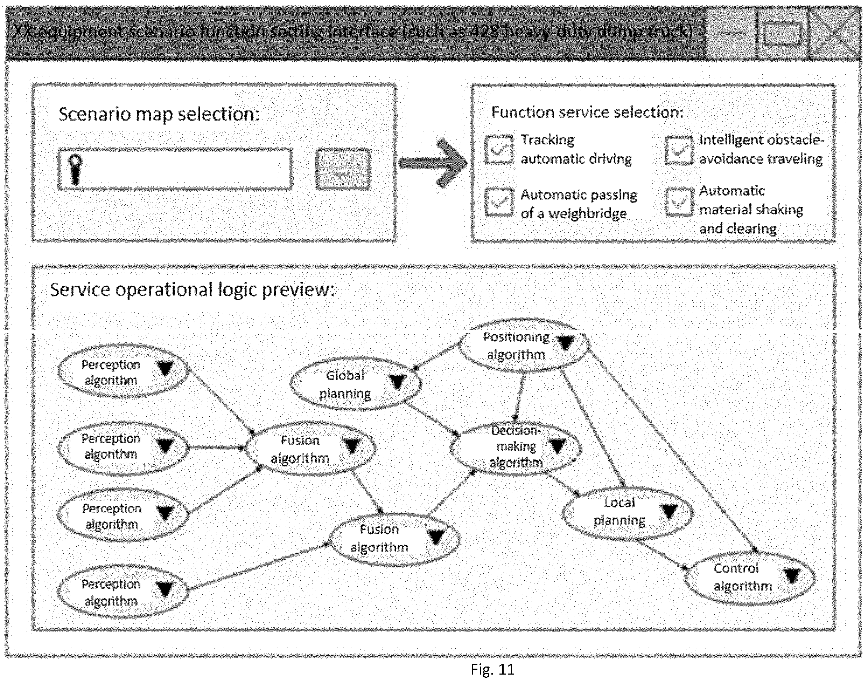

As shown in Fig. 10, each construction machinery in the operating area is represented by its corresponding abstract point in the operating scenario setting interface, the user only needs to move a cursor over the abstract point, and model information of the corresponding construction machinery and device information of the intelligent inference engine installed on the end side may be limited in this interface. If you want to set the construction machinery, the abstract point in the operating scenario setting interface is clicked to enter the scenario function setting interface as shown in Fig. 11. In the present embodiment, the construction machinery to be set is referred to as the target construction machinery.

After selecting the target construction machinery, the on-device computing platform has a basic adaptation with the selected construction machinery, mainly referring to adaptation of a communication protocol.

S413, an initial scenario map is determined in response to a selecting operation of a scenario map in the scenario function setting interface.

There is a scenario map selection area in the scenario function setting interface, and the initial scenario map is obtained by selecting the scenario map in the area. It should be noted that the initial scenario map here corresponds to an initial state of the scenario, and with the help of the initial scenario map data, the corresponding construction machinery can start intelligent operating.

S414, the target scenario map is determined by updating the initial scenario map based on the position of each construction machinery.

In the operating process of the construction machinery, the target server receives the position information uploaded by each construction machinery within the operating area, and updates the initial scenario map based on these pieces of position information. Certainly, the information received by the target server is not limited to the above position information, but may also include the image data collected by each construction machinery, which is not limited here. Because the position of each construction machinery dynamically changes within the operating area, the scenario map data within the operating area is also dynamic correspondingly. The target server receives the data uploaded by each construction machinery and continuously updates the scenario map to ensure the accuracy of the obtained target scenario map. The target scenario map not only includes the static target within the scenario, but also includes the dynamic target.

S42, the at least one service scenario under the target application scenario and the service operational logic of each service scenario are determined based on the scenario feature of the target scenario map.

Specifically, the scenario function setting interface includes a service scenario display area and a service operational logic display area. Based on this, S42 above includes:

S421, optional service scenarios corresponding to the target scenario map are displayed in the service scenario display area by querying a service scenario library based on the feature of the target scenario map.

As shown in Fig. 11, the top left of the scenario function setting interface is a scenario map selection area, the top right is the service scenario display area, and the bottom is the service operational logic of the service scenario. After selecting the scenario map, the target application scenario is determined by analyzing the feature of the target scenario map, and then the target application scenario is used to query the service scenario library, so as to display the optional service scenarios corresponding to the target scenario map in the service scenario display area.

For example, after selecting the scenario map, the corresponding supported service scenarios will be refreshed and generated in the service scenario display area, and these service scenarios are all selected by default. As shown in Fig. 11, after selecting the scenario map, the optional service scenarios displayed in the service scenario display area include tracking automatic driving, intelligent obstacle-avoidance traveling, automatic passing of a weighbridge, automatic material shaking and clearing, etc.

S422, the at least one service scenario under the target application scenario is determined in response to a selecting operation on the optional service scenarios, and the service operational logic corresponding to each service scenario is displayed in the service operational logic display area.

As mentioned above, the optional service scenarios refer to all possible service scenarios supported under the scenario map, but not all the optional service scenarios are necessary under the current target application scenario. Therefore, the user may determine the at least one service scenario under the target application scenario by selecting the optional service scenarios through interactive processing.

As shown in Fig. 11, the service operational logic corresponding to the service scenario is displayed in the service operational logic display area, namely, a connection relationship of each functional algorithm software node and the corresponding functional algorithm software node. The functional algorithm software node is composed of a functional algorithm plugin and a communication interface file to form a relatively independent algorithm service unit. The target server stores the service operational logic corresponding to each service scenario, and the service scenario corresponding to each application scenario. After determining the target application scenario and selecting the service scenarios, the at least one service scenario and the service operational logic of each service scenario may be automatically determined.

Displaying the service operational logic corresponding to each service scenario in the service operational logic display area is to enable the user to intuitively perceive the service operational logic under each service scenario, and the service operational logic may also be adjusted according to actual needs.

After selecting the service scenario, a service operational logic blocking diagram corresponding to the specified service scenario will be displayed in the service operational logic display area. As shown in Fig. 11, the service operational logic corresponding to a certain complex service scenario is: a functional algorithm software node using four perception algorithms, a functional algorithm software node using two fusion algorithms, a functional algorithm software node using one positioning algorithm, a functional algorithm software node using one global planning algorithm, a functional algorithm software node using one decision-making algorithm, a functional algorithm software node using one local planning algorithm, and a functional algorithm software node using one control algorithm. Output of the functional algorithm software node using the three perception algorithms is first given to the functional algorithm software node using one fusion algorithm for fusion calculation, and output of the functional algorithm software node of the fusion algorithm and the functional algorithm software node using the fourth perception algorithm are then given together to the functional algorithm software node using the second fusion algorithm for new fusion calculation, and so on. These functional algorithm software nodes run in an orderly manner according to the above data flow relationship, which is a complete application program.

In some implementations, the service operational logic includes the plurality of functional algorithm software nodes and the connection relationship between the functional algorithm software nodes. S42 above further includes:
(1) displaying, in response to a combination configuration operation on target functional algorithm software nodes in the service operational logic display area, an optional intelligent inference model that implements target functional algorithm plugins; and
(2) determining, in response to a selecting operation on the optional intelligent inference model, target intelligent inference models of the target functional algorithm plugins so as to determine the service operational logic of the service scenario.

Each functional algorithm plugin may select the optional intelligent inference model used, as shown in Fig. 11, there is an "inverted triangle" icon on the block diagrams of all the functional algorithm modules, the icon represents a pull-down menu, and the intelligent inference model used in the functional algorithm module may be selected by clicking the icon. Taking the target functional algorithm plugins as an example, by clicking the "inverted triangle" icon, the optional intelligent inference models of the target functional algorithm modules are displayed in the pull-down menu. Through interaction, the selection of the optional intelligent inference models is performed so as to determine the target intelligent inference models of the target functional algorithm modules.

The target functional algorithm plugins are implemented based on the optional intelligent inference models, and the target intelligent inference models to implement the target function are finally determined. As the target intelligent inference models have been trained on a target server end and may be directly used in the configuration process, correspondingly, not all the optional intelligent inference models are issued to the construction machinery, but are issued on demand, so as to ensure the lightweight running of the computing platform on the construction machinery end.

It should be noted that in the scenario function setting interface shown in Fig. 11, the scenario map data selected in the upper left determines the number of the optional service scenarios presented in the upper right; while the selection of the optional service scenarios in the upper right determines the service operational logic block diagram below. So the result of S22 above is to push the scenario map data of the initial state of the construction machinery operating scenario, the upper-level service operational logic corresponding to the scenario function, the Al inference model data, etc. to the computing platform on the construction machinery end side, namely, the on-device lightweight intelligent inference engine.

S43, the global configuration file under the target application scenario is determined in response to a logical configuration between the service scenarios.

Please refer to S33 of the embodiment shown in Fig. 8 for details, which will not be repeated here.

S44, based on collected data of each construction machinery at a current position, the initial scenario map is updated to determine the target scenario map.

Because the target scenario map needs to be dynamically updated, for the reason of the collaborative operating of various construction machinery in the target application scenario, and dynamic change in topography and terrain, and a traveling area, the target scenario map needs to be updated in the target server in combination with the environmental information collected by each construction machinery. The updated target scenario map is issued to each construction machinery, so that the construction machinery performs motion control based on the updated target scenario map, thereby ensuring the safety of the construction machinery.

By integrating the collected data of each construction machinery, the target scenario map can be dynamically updated in a timely manner, and the updated target scenario map is issued to the construction machinery, so that the construction machinery performs obstacle avoidance processing based on the dynamic target scenario map, thereby avoiding walking accidents and improving the safety of the construction machinery. An update operation of the map is processed on the target server end, so that the data processing capacity on the construction machinery side can be reduced, and work efficiency is improved. The target scenario map obtained by the target server end is generated through a collection of the environmental information collected by all construction machinery, and belongs to global map information. The target scenario map is then issued to each construction machinery, so that all the construction machinery can share the target scenario map and avoid repetitive map construction.

For the target server, when issuing the global configuration file to the construction machinery, the target scenario map is also issued to the construction machinery.

Please refer to S34 of the embodiment shown in Fig. 8 for details, which will not be repeated here.

According to the automatic driving operating method for the construction machinery provided in the present embodiment, the target server can perform integrated scheduling on the plurality of construction machinery in the target application scenario, and the integrated scheduling is implemented through an interactive interface, which is not only convenient for the user to operate, but also can display the operating status of each construction machinery on the interface in real-time and intuitively. At the same time, the initial scenario map is updated by using the position of each construction machinery to ensure the accuracy of the target scenario map issued to the construction machinery. The optional service scenarios related to the features of the target scenario map are queried in the service scenario library. These optional service scenarios are displayed in the service scenario display area for the user to screen based on actual needs and ultimately determine the at least one service scenario under the target application scenario, thereby improving the efficiency of determining the service scenarios and thus improving the operating efficiency of the construction machinery.

Construction machinery vehicles are undergoing a comprehensive transformation towards electrification, and electrification effectively promotes intelligent and networked implementation of the construction machinery vehicles. Faced with the increasing complexity of automatic driving software and hardware volume, there are also more and more types of SOC chips that need to be carried. Based on this, a method that can achieve plug and play, convenient and fast expansion of computility is further provided in the present embodiment.

As an optional implementation of the embodiment of the present application, the method is implemented based on a software system deployed on the on-device computing platform of the construction machinery, and computility of the software system is provided by a first computility board. Based on this, the above method further includes:
(1) detecting running performance of the first computility board; and
(2) prompting information on needing to newly add a computility board when the running performance does not meet demands.

The first computility board is used to deploy a master engine. A process of deploying the software system on the first computility board includes: compiling the software system by using a cross compilation tool chain provided by the master engine, packaging an executable file generated by compiling and the corresponding lib in a one-click mode, and deploying them into the master engine through a one-click deployment tool.

The cross compiling tool chain consists of a compiler, a connector and an interpreter, and is a program code for compiling, linking, processing and debugging a cross-platform architecture. Each time cross compiling tool chain software is executed, different functions such as compiling, linking, processing, or debugging may be realized by carrying different parameters. From the composition of the tool chain, it is generally composed of a plurality of programs respectively corresponding to each function.

In a running process of the first computility board, resource monitoring of the master engine automatically acquires the corresponding running performance, including, but not limited to, resources or power consumption. The information of needing to newly add the computility board is provided when the running performance does not meet the demands. When the running performance of the first computility board hardly meets the computility demand, the corresponding prompt information is automatically sent out to facilitate timely addition of computility and improve the work efficiency of the construction machinery.

Further, the method further includes:
(1) acquiring, when it is detected that a newly added second computility board exists, a cross compiling tool chain of the second computility board; (2) performing feature analysis on the cross compiling tool chain to determine a target compiling tool of the second computility board;
(3) calling the target compiling tool in a preset compiling tool library to compile the software system and generate a compiled file of the software system; and
(4) deploying the compiled file onto the second computility board, so that the second computility board provides computility for the software system. A user inserts the second computility board into the system of the construction machinery, and correspondingly, the construction machinery detects the newly added second computility board. The second computility board is used to deploy a slave engine, and provide computility support to the construction machinery through cooperation of the master-slave engines.

Specifically, the cross compiling tool chain of the second computility board is acquired, parameter feature analysis is performed on the compiler of the cross compiling tool chain, a compiling tool required by the compiler is determined, and determined as a target compilng tool of the slave engine, and then the corresponding target compiling tool is called in a preset compiling tool library, so that the compiler can generate a compiled file of a construction machinery vehicle software platform based on the target compiling tool. The compiling tool is a code script, and the compiled file includes an executable file and lib corresponding to the software platform.

After obtaining the compiled file of the software system, the compiled file is deployed onto the second computility board, so that the second computility board is used to provide computility for the software system.

When it is detected that the newly added second computility board exists, the target compiling tool of the second computility board is automatically called to compile the software system, so that the obtained compiled file is deployed onto the second computility board, thus the second computility board can be used to provide computility support for the software system, and the computility of the construction machinery can be improved by using a simple processing process.

During the use of the first computility board and the second computility board, software platform running information of the slave engine is monitored, and the software platform running information is synchronized to the master engine of the construction machinery vehicle, wherein, the master engine is a core chip engine of the construction machinery vehicle, and the software platform running information mainly includes a computing task execution result of the software platform on the slave engine.

In some implementations, it further includes monitoring resource consumption status of the master engine and the slave engine, and allocating computing tasks to the master engine and the slave engine according to the resource consumption status of the master engine and the slave engine. It should be noted that the computing tasks may be tasks such as a vehicle automatic traveling strategy determining task, an obstacle avoidance path determining task, and a posture adjusting task in the operating process.

Specifically, the computing tasks can be allocated more to an engine with relatively less current resource consumption according to the resource consumption status of the master engine and the slave engine, that is, the computing tasks are allocated as much as possible to an engine with sufficient resources and low power consumption to achieve balanced task allocation. At the same time, the computing tasks can be allocated in a targeted mode according to hardware computing advantages corresponding to the different engines, so as to fully exert the hardware computing advantages of the construction machinery vehicles, thereby realizing optimal performance and minimal power consumption.

When the resource consumption status of the master engine represents that the master engine is unable to complete the current computing task, the current computing task is migrated to the slave engine. Specifically, in an actual application process, in order to reduce software platform running information communication between the engines as much as possible, the computing tasks may be executed based on the master engine in priority. When the resource consumption status of the master engine represents that its computing resources are scarce, that is, the current computing task cannot be completed, the remaining unexecuted current computing tasks are migrated to the slave engine, where the slave engine is responsible for executing the remaining computing tasks. Finally, an execution result, namely, the software platform running information is synchronized to the master engine.

Intelligent elastic expansion of Al computility is supported on the end side of the construction machinery, the master-slave engines can automatically identify and configure without the need for excessive operations, the process is simple, maintenance is convenient, a lot of development and testing time is saved, and an expansion speed of the Al computility is increased. Stability, reliability, performance, and computing resources of the software system deployed on the entire construction machinery computing platform have been greatly improved, and the difficulty of maintaining the software system in the later stage has also been greatly reduced. When different chips need to be expanded, the computility board is inserted, a one-click compiling tool compiles the platform software by using the cross compiling tool chain of a newly-added computility expansion board, meanwhile deploys the compiled platform software deployment to the slave engine, and starts a component configuration management application. A component configuration management tool informs the slave engine of the required computility resources, starts required application service nodes in the slave engine, and transmits real-time monitoring and other data to the main engine to complete the expansion of the Al computility, which can achieve simple adaptation to SOC chips from different manufacturers while creating a highly-open development ecosystem, can also bring development enthusiasm to many third parties who focus on algorithm research and provide corresponding service engines with high-performance Al computility, achieve plug and play and realize free expanding of Al computility.

In the present embodiment, an automatic driving operating apparatus for construction machinery is further provided, and the apparatus is used to implement the above embodiments and preferred implementations. The parts that have been explained will not be repeated. As used below, a term "module" may implement a combination of software and/or hardware with predetermined functions. Although the apparatus described in the following embodiments is preferably implemented in software, the implementation of hardware, or a combination of software and hardware, is also possible and envisioned.

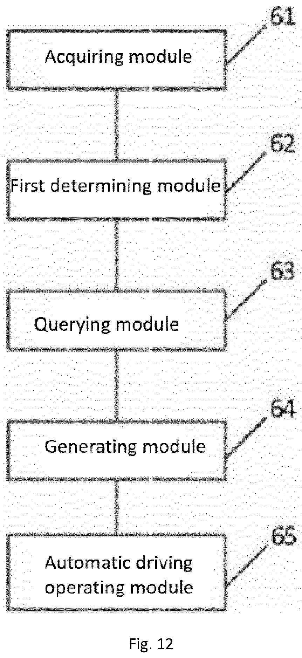

The present embodiment provides an automatic driving operating apparatus for construction machinery, as shown in Fig. 12, including:
an acquiring module 61, configured to acquire current environmental information of construction machinery under a target application scenario;
a first determining module 62, configured to determine, after determining the target application scenario, a target service scenario corresponding to the current environmental information based on a corresponding relationship between environmental information and a service scenario;
a querying module 63, configured to query, when the target service scenario is inconsistent with a current service scenario, a service operational logic of the target service scenario in a global configuration file, wherein the global configuration file includes at least one service scenario under the target application scenario, a service operational logic of each service scenario, and a logical relationship between the service scenarios;
a generating module 64, configured to generate a target application program under the target service scenario based on the service operational logic of the target service scenario; and
an automatic driving operating control module 65, configured to perform automatic driving operating control on the construction machinery based on the target application program.

In some implementations, the generating module 64 includes:
a first determining unit, configured to determine a first algorithm plugin and a first communication interface required by the target service scenario based on the service operational logic of the target service scenario; and
an assembling unit, configured to assemble the first algorithm plugin and the first communication interface to generate the target application program under the target service scenario, wherein
when the first algorithm plugin that relies on an intelligent inference model exists, the module further includes: loading a first intelligent inference model corresponding to the first algorithm plugin in a cache area.

In some implementations, the assembling unit includes:
a first acquiring subunit, configured to acquire a current application program under the current service scenario, the current application program being obtained by assembling a second algorithm plugin and a second communication interface; and
a first determining subunit, configured to adjust, based on a difference between a current service operational logic under the current service scenario and the service operational logic of the target service scenario, the current application program by using the first algorithm plugin and the first communication interface to determine the target application program, wherein,
when the first algorithm plugin that relies on the intelligent inference model exists, the adjusting further includes: performing adjustment of the intelligent inference model on the first algorithm plugin that relies on the intelligent inference model.

In some implementations, the first determining module 62 includes:
a second determining unit, configured to determine the target service scenario corresponding to the current environmental information based on a corresponding relationship between image information and the service scenario;
   and/or,
a third determining unit, configured to determine the target service scenario corresponding to the current environmental information based on a corresponding relationship between position information and the service scenario.

In some implementations, the apparatus further includes:
an acquiring module, configured to acquire initial environmental information when the construction machinery starts;
a second determining module, configured to determine an actual initial service scenario corresponding to the initial environmental information based on a corresponding relationship between the environmental information and the service scenario;
a verifying module, configured to verify the actual initial service scenario by using an initial service scenario in the application scenario;
an alarming module, configured to issue alarm reminder when the verifying fails to pass; and
an operating control module, configured to perform automatic driving operating control on the construction machinery based on the initial environmental information when the verifying passes.

In some implementations, determining the global configuration file is based on a scenario feature of a target scenario map of the target application scenario.

In some implementations, a determining module of the global configuration file includes:
a first response unit, configured to determine the target scenario map of the target application scenario in response to selection of a scenario map of the target application scenario in a scenario function setting interface;
a fourth determining unit, configured to determine the at least one service scenario under the target application scenario and the service operational logic of each service scenario based on the scenario feature of the target scenario map; and
a second response unit, configured to determine the global configuration file under the target application scenario in response to a logical configuration between the service scenarios.

In some implementations, the first response unit includes:
a first response subunit, configured to display an operating scenario setting interface in response to an operating setting operation on the target application scenario, wherein the operating scenario setting interface includes an operating area of the target application scenario and a position of each construction machinery within the operating area;
a second response subunit, configured to display a scenario function setting interface of target construction machinery in response to a selecting operation of the target construction machinery in the operating scenario setting interface;
a third response subunit, configured to determine an initial scenario map in response to a selecting operation of the scenario map in the scenario function setting interface; and
an updating subunit, configured to update, based on collected data of each construction machinery at a current position, the initial scenario map to determine the target scenario map.

In some implementations, the control module 65 includes:
a first acquiring unit, configured to acquire, when the first algorithm plugin is implemented relying on a target intelligent inference model, input data of the target intelligent inference model;
a loading unit, configured to load a model file of the target intelligent inference model based on an intelligent inference engine so as to infer the input data and determine an inference result; and
a control unit, configured to perform automatic driving operating control based on the inference result.

In some implementations, the loading unit includes:
a second determining subunit, configured to infer, when an updated target intelligent inference model issued by a target server is acquired, the input data based on the intelligent inference engine and the updated target intelligent inference model, and determine the inference result, wherein the updated target intelligent inference model is determined by the target server after updating the target intelligent inference model based on environmental information collected by each construction machinery and driving operating control result data.

In some implementations, the method is implemented based on a software system deployed on the on-device computing platform of the construction machinery, computility of the software system is provided by a first computility board, and the apparatus further includes:
a first detecting module, configured to detect running performance of the first computility board; and
a prompting module, configured to prompt information on needing to newly add a computility board when the running performance does not meet demands. In some implementations, the apparatus further includes:
a second detecting module, configured to acquire, when it is detected that a newly added second computility board exists, a cross compiling tool chain of the second computility board;
an analyzing module, configured to perform feature analysis on the cross compiling tool chain to determine a target compiling tool of the second computility board;
a compiling module, configured to call the target compiling tool in a preset compiling tool library to compile the software system and generate a compiled file of the software system; and
a deploying module, configured to deploy the compiled file onto the second computility board, so that the second computility board provides computility for the software system.

The automatic driving operating apparatus for the construction machinery in the present embodiment is presented in a form of a functional unit, the unit here refers to an ASIC, a processor and memory that execute one or more pieces of software or a fixed program, and/or other devices that may provide the above functions.

The further functional descriptions of each module above are the same as the corresponding embodiments above, and will not be repeated here.

An embodiment of the present application further provides an electronic device, having the automatic driving operating apparatus for the construction machinery as shown in Fig. 12 above.

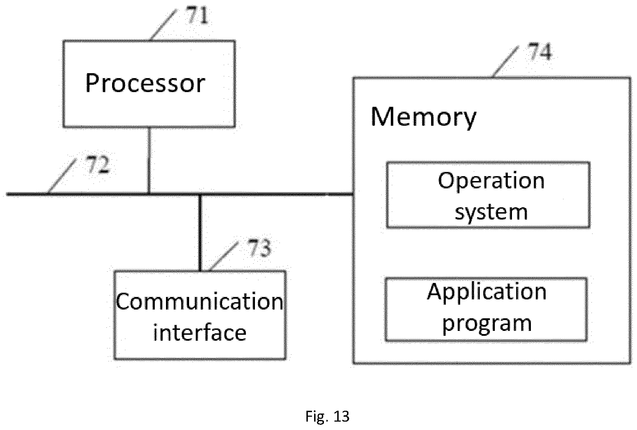

Please referring to Fig. 13, Fig. 13 is a schematic structural diagram of an electronic device provided by an optional embodiment of the present application, and as shown in Fig. 13, the electronic device may include: at least one processor 71, such as a central processing unit (CPU), at least one communication interface 73, a memory 74, and at least one communication bus 72. The communications bus 72 is used to implement connection and communication between these components. The communication interface 73 may include a display and a keyboard. Optionally, the communication interface 73 may further include a standard wired interface and wireless interface. The memory 74 may be a high-speed random access memory (RAM, a volatile random access memory) or a non-volatile memory, such as at least one disk memory. Optionally, the memory 74 may further be at least one storage apparatus that is located far away from the foregoing processor 71. The processor 71 may combine with the apparatus described in Fig. 9, an application program is stored in the memory 74, and the processor 71 calls a program code stored in the memory 74 for executing any of the above method steps.

The communication bus 72 may be a peripheral component interconnect (PCI for short) bus or an extended industry standard architecture (EISA for short) bus, and the like. The communication bus 72 may be divided into an address bus, a data bus, a control bus, and the like. For facilitating representation, the bus is only represented with a thick line in Fig. 13, but it does not represent that there is only one bus or any type of buses. The memory 74 may include a volatile memory, such as a random-access memory (RAM for short); the memory may also include a non-volatile memory, such as a flash memory, a hard disk drive (HCD for short) or a solid-state drive (SSD for short); and the memory 74 may further include a combination of the aforementioned types of memory.

The processor 71 may be a central processing unit (GPU for short), a network processor (NP for short), or a combination of CPU and NP.

The processor 71 may further include a hardware chip. The above hardware chip may be an application-specific integrated circuit (ASIC for short), a programmable logic device (PLD for short) or a combination thereof. The above PLD may be a complex programmable logic device (CPLD for short), a field-programmable gate array (FPGA for short), a generic array logic (GAL for short) or any combination thereof.

Optionally, the memory 74 is further used to store program instructions. The processor 71 may call the program instructions to implement the automatic driving operating method for the construction machinery as shown in any embodiment of the present application.

An embodiment of the present application further provides a non-transient computer storage medium, the computer storage medium stores computer executable instructions, and the computer executable instructions can execute the automatic driving operating method for the construction machinery in any of the above method embodiments. The storage medium may be a magnetic disc, an optical disc, a read-only memory (ROM), a random access memory (RAM), a flash memory, a hard disk drive (HDD for short) or a solid-state drive (SSD). The storage medium may further include a combination of the aforementioned types of memories.

## Claims

1. An automatic driving operating method for construction machinery, applied to an on-device computing platform of the construction machinery,
**characterized in that**, the method comprises:
identifying a target application scenario, the target application scenario comprising multiple service scenarios;
acquiring current environmental information of construction machinery;
determining a target service scenario of the target application scenario corresponding to the current environmental information based on a corresponding relationship between environmental information and the service scenarios of the target application scenario;
querying, when the target service scenario is inconsistent with a current service scenario of the target application scenario, a service operational logic of the target service scenario in a global configuration file by using the target application scenario and the determined target service scenario for the query,
wherein the global configuration file comprises
one or more application scenarios,
and for each of the one or more application scenarios,
at least one service scenario,
a service operational logic of each service scenario, wherein the service operational logic of each service scenario is used to represent an operating action required to be executed for implementing the service scenario; and
a logical relationship between the service scenarios,
wherein each of the one or more application scenarios is an entire global scenario of an entire process, and the service scenarios are specific subdivision scenarios under the global scenario;
generating a target application program based on the queried service operational logic of the target service scenario; and
performing automatic driving operating control on the construction machinery based on the target application program.

2. The method according to claim 1, **characterized in that** generating the target application program based on the service operational logic of the queried target service scenario comprises:
determining a first algorithm plugin and a first communication interface required by the target service scenario based on the queried service operational logic of the target service scenario; and
assembling the first algorithm plugin and the first communication interface to generate the target application program, wherein
when the first algorithm plugin that relies on an intelligent inference model exists, the method further comprises: loading a first intelligent inference model corresponding to the first algorithm plugin in a cache area.

3. The method according to claim 2, **characterized in that** assembling the first algorithm plugin and the first communication interface to generate the target application program comprises:
acquiring a current application program of the current service scenario, the current application program being obtained by assembling a second algorithm plugin and a second communication interface; and
adjusting, based on a difference between a current service operational logic of the current service scenario and the service operational logic of the target service scenario, the current application program by using the first algorithm plugin and the first communication interface to determine the target application program, wherein when the first algorithm plugin that relies on the intelligent inference model exists, the adjusting further comprises: performing adjustment of the intelligent inference model on the first algorithm plugin that relies on the intelligent inference model.

4. The method according to claim 1, **characterized in that** determining the target service scenario of the target application scenario corresponding to the current environmental information based on the corresponding relationship between the environmental information and the service scenarios of the target application scenario comprises:
determining the target service scenario of the target application scenario corresponding to the current environmental information based on a corresponding relationship between image information and the service scenarios of the target application scenario;
and/or,
determining the target service scenario of the target application scenario corresponding to the current environmental information based on a corresponding relationship between position information and the service scenarios of the target application scenario.

5. The method according to claim 1, **characterized by** further comprising:
acquiring initial environmental information when the construction machinery starts;
determining an actual initial service scenario corresponding to the initial environmental information based on a corresponding relationship between the environmental information and the service scenarios;
verifying the actual initial service scenario by using an initial service scenario in the application scenario;
issuing alarm reminder when the verifying fails to pass; and
performing automatic driving operating control on the construction machinery based on the initial environmental information when the verifying passes.

6. The method according to claim 1, **characterized in that** determining the global configuration file is based on a scenario feature of a target scenario map of the target application scenario.

7. The method according to claim 6, **characterized in that** a mode for determining the global configuration file comprises:
determining the target scenario map of the target application scenario in response to selection of a scenario map of the target application scenario in a scenario function setting interface;
determining the at least one service scenario and the service operational logic of each service scenario based on the scenario feature of the target scenario map; and
determining the global configuration file in response to a logical configuration between the service scenarios.

8. The method according to claim 7, **characterized in that** determining the target scenario map of the target application scenario in response to the selection of the scenario map of the target application scenario in the scenario function setting interface comprises:
displaying an operating scenario setting interface in response to an operating setting operation on the target application scenario, wherein the operating scenario setting interface comprises an operating area of the target application scenario and a position of each construction machinery within the operating area;
displaying a scenario function setting interface of target construction machinery in response to a selecting operation of the target construction machinery in the operating scenario setting interface;
determining an initial scenario map in response to a selecting operation of a scenario map in the scenario function setting interface; and
updating, based on collected data of each construction machinery at a current position, the initial scenario map to determine the target scenario map.

9. The method according to claim 2, **characterized in that** performing the automatic driving operating control on the construction machinery based on the target application program comprises:
acquiring, when the first algorithm plugin is implemented relying on a target intelligent inference model, input data of the target intelligent inference model;
loading a model file of the target intelligent inference model based on an intelligent inference engine so as to infer the input data and determine an inference result; and
performing automatic driving operating control based on the inference result.

10. The method according to claim 9, **characterized in that** loading the model file of the target intelligent inference model based on the intelligent inference engine so as to infer the input data and determine the inference result comprises:
loading, when an updated target intelligent inference model issued by a target server is acquired, a model file of the updated target intelligent inference model based on the intelligent inference engine so as to infer the input data and determine the inference result, wherein the updated target intelligent inference model is determined by the target server after updating the target intelligent inference model based on environmental information collected by each construction machinery and driving operating control result data.

11. The method according to claim 1, **characterized in that** the method is implemented based on a software system deployed on the on-device computing platform of the construction machinery, computility of the software system is provided by a first computility board, and the method further comprises:
detecting running performance of the first computility board; and
prompting information on needing to newly add a computility board when the running performance does not meet demands;
acquiring, when it is detected that a newly added second computility board exists, a cross compiling tool chain of the second computility board;
performing feature analysis on the cross compiling tool chain to determine a target compiling tool of the second computility board;
calling the target compiling tool in a preset compiling tool library to compile the software system and generate a compiled file of the software system; and
deploying the compiled file onto the second computility board, so that the second computility board provides computility for the software system.

12. An automatic driving operating apparatus for construction machinery, **characterized in that**, the apparatus comprises:
an acquiring module (61), configured to identify a target application scenario, the target application scenario comprising multiple service scenarios, and acquire current environmental information of construction machinery;
a first determining module (62), configured to determine, a target service scenario of the target application scenario corresponding to the current environmental information based on a corresponding relationship between environmental information and the service scenarios of the target application scenario;
a querying module (63), configured to query, when the target service scenario is inconsistent with a current service scenario of the target application scenario, a service operational logic of the target service scenario in a global configuration file by using the target application scenario and the determined target service scenario for the query,
wherein the global configuration file comprises
one or more application scenarios,
and for each of the one or more application scenarios,
at least one service scenario,
a service operational logic of each service scenario, wherein the service operational logic of each service scenario is used to represent an operating action required to be executed for implementing the service scenario, and
a logical relationship between the service scenarios,
wherein each of the one or more application scenarios is an entire global scenario of an entire process, and the service scenarios are specific subdivision scenarios under the global scenario;
a generating module (64), configured to generate a target application program based on the service operational logic of the queried target service scenario; and
an automatic driving operating module (65), configured to perform automatic driving operating control on the construction machinery based on the target application program.

13. An electronic device, **characterized by** comprising:
a memory (74) and a processor (71), which are in communication connection with each other, wherein the memory (74) stores computer instructions, and the processor (71) executes the automatic driving operating method for the construction machinery according to any one of claims 1-11 by executing the computer instructions.

14. A computer readable storage medium, **characterized in that** the computer readable storage medium stores computer instructions, and the computer instructions are used to cause a computer to execute the automatic driving operating method for the construction machinery according to any one of claims 1-11.

15. An intelligent networked collaborative driving operating system for construction machinery, **characterized by** comprising:
at least one on-device computing platform (20) of a construction machinery, configured to execute the automatic driving operating method for the construction machinery according to any one of claims 1-11; and
a target server (10), in communication connection with the at least one on-device computing platform of the construction machinery, and configured to update a target intelligent inference model based on environmental information collected by each construction machinery and driving operating control result data, and issue an updated target intelligent inference model to the construction machinery corresponding to the target intelligent inference model.

## Patentansprüche

1. Verfahren zum automatischen Fahrbetrieb für Baumaschinen, angewandt auf einer bordeigenen Rechenplattform der Baumaschinen,
**dadurch gekennzeichnet, dass** das Verfahren Folgendes umfasst:
Identifizieren eines Zielanwendungsszenarios, wobei das Zielanwendungsszenario mehrere Serviceszenarien umfasst:
Erfassen von momentanen Umgebungsinformationen von Baumaschinen;
Ermitteln eines Zielserviceszenarios des Zielanwendungsszenarios, das basierend auf einer entsprechenden Beziehung zwischen Umgebungsinformationen und den Serviceszenarien des Zielanwendungsszenarios den momentanen Umgebungsinformationen entspricht;
Abfragen, wenn das Zielserviceszenario nicht mit einem momentanen Serviceszenario des Zielanwendungsszenarios übereinstimmt, einer Servicebetriebslogik des Zielserviceszenarios in einer globalen Konfigurationsdatei unter Verwendung des Zielanwendungsszenarios und des für die Abfrage ermittelten Zielserviceszenarios,
wobei die globale Konfigurationsdatei
ein oder mehrere Anwendungsszenarien,
und für jedes des einen oder der mehreren Anwendungsszenarien,
mindestens ein Serviceszenario,
eine Servicebetriebslogik jedes Serviceszenarios, wobei die Servicebetriebslogik jedes Serviceszenarios für die Darstellung eines Bedienvorgangs, dessen Ausführung für die Umsetzung des Serviceszenarios erforderlich ist, verwendet wird; und
eine logische Beziehung zwischen den Serviceszenarien umfasst,
wobei jedes des einen oder der mehreren Anwendungsszenarien ein vollständiges globales Szenario eines vollständigen Prozesses ist und die Serviceszenarien spezifische Unterteilungsszenarien unter dem globalen Szenario sind;
Generieren eines Zielanwendungsprogramms basierend auf der abgefragten Servicebetriebslogik des Zielserviceszenarios; und
Durchführen einer automatischen Fahrbetriebssteuerung bei den Baumaschinen basierend auf dem Zielanwendungsprogramm.

2. Verfahren nach Anspruch 1, **dadurch gekennzeichnet, dass** das Generieren des Zielanwendungsprogramms basierend auf der Servicebetriebslogik des abgefragten Zielserviceszenarios Folgendes umfasst:
Ermitteln eines ersten Algorithmus-Plug-Ins und einer ersten Kommunikationsschnittstelle, die von dem Zielservicezenario basierend auf der abgefragten Servicebetriebslogik des Zielserviceszenarios erfordert werden; und,
Zusammenbauen des ersten Algorithmus-Plug-Ins und der ersten Kommunikationsschnittstelle zum Generieren des Zielanwendungsprogramms, wobei bei Vorhandensein des ersten Algorithmus-Plug-Ins, das auf einem intelligenten Inferenzmodell beruht, das Verfahren ferner umfasst: Laden eines ersten, dem ersten Algorithmus-Plug-In entsprechenden Inferenzmodells in einen Cache-Bereich.

3. Verfahren nach Anspruch 2, **dadurch gekennzeichnet, dass** das Zusammenbauen des ersten Algorithmus-Plug-Ins und der ersten Kommunikationsschnittstelle zum Generieren des Zielanwendungsprogramms Folgendes umfasst:
Erfassen eines momentanen Anwendungsprogramms des momentanen Serviceszenarios, wobei das momentane Anwendungsprogramm durch Zusammenbauen eines zweiten Algorithmus-Plug-Ins und einer zweiten Kommunikationsschnittstelle erhalten wird; und
Anpassen, basierend auf einem Unterschied zwischen einer momentanen Servicebetriebslogik des momentanen Serviceszenarios und der Servicebetriebslogik des Zielserviceszenarios, des momentanen Anwendungsprogramms unter Verwendung des ersten Algorithmus-Plug-Ins und der ersten Kommunikationsschnittstelle, um das Zielanwendungsprogramm zu ermitteln, wobei bei Vorhandensein des ersten Algorithmus-Plug-Ins, das auf dem intelligenten Inferenzmodell beruht, das Anpassen ferner Folgendes umfasst: Durchführen des Anpassens des intelligenten Inferenzmodells an dem ersten Algorithmus-Plug-In, das auf dem intelligenten Inferenzmodell beruht.

4. Verfahren nach Anspruch 1, **dadurch gekennzeichnet, dass** Ermitteln des Zielserviceszenarios des Zielanwendungsszenarios, das basierend auf der entsprechenden Beziehung zwischen Umgebungsinformationen und den Serviceszenarien des Zielanwendungsszenarios den momentanen Umgebungsinformationen entspricht, Folgendes umfasst:
Ermitteln des Zielserviceszenarios des Zielanwendungsszenarios, das basierend auf einer entsprechenden Beziehung zwischen Bildinformationen und den Serviceszenarien des Zielanwendungsszenarios den momentanen Umgebungsinformationen entspricht;
und/oder
Ermitteln des Zielserviceszenarios des Zielanwendungsszenarios, das basierend auf einer entsprechenden Beziehung zwischen Positionsinformationen und den Serviceszenarien des Zielanwendungsszenarios den momentanen Umgebungsinformationen entspricht.

5. Verfahren nach Anspruch 1, **dadurch gekennzeichnet, dass** es ferner Folgendes umfasst:
Erfassen von ursprünglichen Umgebungsinformationen beim Starten der Baumaschinen;
Ermitteln eines tatsächlichen ursprünglichen Serviceszenarios entsprechend den ursprünglichen Umgebungsinformationen basierend auf einer entsprechenden Beziehung zwischen den Umgebungsinformationen und den Serviceszenarien;
Verifizieren des tatsächlichen ursprünglichen Serviceszenarios unter Verwendung eines ursprünglichen Serviceszenarios in dem Anwendungsszenario;
Ausgeben einer Warnerinnerung bei Fehlschlagen des Verifizierens; und
Durchführen einer automatischen Fahrbetriebssteuerung der Baumaschinen basierend auf den ursprünglichen Umgebungsinformationen bei erfolgreichem Ausgang des Verifizierens.

6. Verfahren nach Anspruch 1, **dadurch gekennzeichnet, dass** Ermitteln der globalen Konfigurationsdatei auf einem Szenariomerkmal einer Zielszenariokarte des Zielanwendungsszenarios basiert.

7. Verfahren nach Anspruch 6, **dadurch gekennzeichnet, dass** ein Modus zum Ermitteln der globalen Konfigurationsdatei Folgendes umfasst:
Ermitteln der Zielszenariokarte des Zielanwendungsszenarios in Reaktion auf eine Auswahl einer Szenariokarte des Zielanwendungsszenarios in einer Schnittstelle zur Einstellung einer Szenariofunktion;
Ermitteln des mindestens einen Serviceszenarios und der Servicebetriebslogik jedes Serviceszenarios basierend auf dem Szenariomerkmal der Zielszenariokarte; und
Ermitteln der globalen Konfigurationsdatei in Reaktion auf eine logische Konfiguration zwischen den Serviceszenarien.

8. Verfahren nach Anspruch 7, **dadurch gekennzeichnet, dass** Ermitteln der Zielszenariokarte des Zielanwendungsszenarios in Reaktion auf die Auswahl einer Szenariokarte des Zielanwendungsszenarios in einer Schnittstelle zur Einstellung einer Szenariofunktion Folgendes umfasst:
Abbilden einer Schnittstelle zur Einstellung eines Betriebsszenarios in Reaktion auf einen Betriebseinstellvorgang beim Zielanwendungsszenario, wobei die Schnittstelle zur Einstellung des Betriebsszenarios einen Betriebsbereich des Zielanwendungsszenarios und die Position jeder Baumaschine innerhalb des Betriebsbereichs umfasst;
Abbilden einer Schnittstelle zur Einstellung einer Szenariofunktion von Zielbaumaschinen in Reaktion auf einen Auswahlvorgang der Zielbaumaschinen in der Schnittstelle zur Einstellung des Betriebsszenarios;
Ermitteln einer ursprünglichen Szenariokarte in Reaktion auf einen Auswahlvorgang einer Szenariokarte in der Schnittstelle zur Einstellung der Szenariofunktion; und
Aktualisieren, basierend auf gesammelten Daten jeder Baumaschine an der momentanen Position, der ursprünglichen Szenariokarte, um die Zielszenariokarte zu ermitteln.

9. Verfahren nach Anspruch 2, **dadurch gekennzeichnet, dass** Durchführen der automatischen Fahrbetriebssteuerung bei den Baumaschinen basierend auf dem Zielanwendungsprogramm Folgendes umfasst:
Erfassen, bei Umsetzung des ersten Algorithmus-Plug-Ins beruhend auf einem intelligenten Zielinferenzmodell, von Eingabedaten des intelligenten Zielinferenzmodells;
Laden einer Modelldatei des intelligenten Zielinferenzmodells basierend auf einem intelligenten Inferenzengine, um so die Eingabedaten zu inferieren und ein Inferenzergebnis zu ermitteln; und
Durchführen einer automatischen Fahrbetriebssteuerung basierend auf dem Inferenzergebnis.

10. Verfahren nach Anspruch 9, **dadurch gekennzeichnet, dass** Laden der Modelldatei des intelligenten Zielinferenzmodells basierend auf dem intelligenten Inferenzengine, um so die Eingabedaten zu inferieren und das Inferenzergebnis zu ermitteln, Folgendes umfasst: Laden, bei Erfassen einer Ausgabe eines aktualisierten intelligenten Zielinferenzmodells durch einen Zielserver, einer Modelldatei des aktualisierten intelligenten Zielinferenzmodells basierend auf dem intelligenten Inferenzengine, um so die Eingabedaten zu inferieren und das Inferenzergebnis zu bestimmen, wobei das aktualisierte intelligente Zielinferenzmodell durch den Zielserver ermittelt wird, nachdem das intelligente Zielinferenzmodell basierend auf von jeder Baumaschine gesammelten Umgebungsdaten und Fahrbetriebssteuerungsergebnisdaten aktualisiert wurde.

11. Verfahren nach Anspruch 1, **dadurch gekennzeichnet, dass** das Verfahren basierend auf einem auf der bordeigenen Rechenplattform der Baumaschinen eingesetzten Softwaresystem umgesetzt wird, wobei die Rechenleistung des Softwaresystems durch ein erstes Rechenleistungsboard bereitgestellt ist, und wobei das Verfahren ferner umfasst:
Erkennen einer Betriebsleistung des ersten Rechenleistungsboards; und
Hervorrufen einer Information darüber, dass ein neues Rechenleistungsboard hinzugefügt werden muss, wenn die Betriebsleistung nicht die Anforderungen erfüllt;
Erlangen einer Cross-Compile-Toolchain des zweiten Rechenleistungsboards, wenn erkannt wird, dass ein neu hinzugefügtes zweites Rechenleistungsboard vorhanden ist;
Durchführen einer Merkmalsanalyse an der Cross-Compiling-Toolchain, um ein Zielkompilierwerkzeug des zweiten Rechenleistungsboards zu bestimmen;
Aufrufen des Zielkompilierwerkzeugs in einer voreingestellten Kompilierwerkzeug-Bibliothek, um das Softwaresystem zu kompilieren und eine kompilierte Datei des Softwaresystems zu generieren; und
Einsetzen der kompilierten Datei auf dem zweiten Rechenleistungsboard, sodass das zweite Rechenleistungsboard Rechenleistung für das Softwaresystem bereitstellt.

12. Vorrichtung zum automatischen Fahrbetrieb für Baumaschinen, **dadurch gekennzeichnet, dass** die Vorrichtung Folgendes umfasst:
ein Erfassungsmodul (61), das zum Identifizieren eines Zielanwendungsszenarios, das Zielanwendungsszenario umfassend mehrere Serviceszenarien, und zum Erfassen von momentanen Umgebungsinformationen von Baumaschinen ausgebildet ist,
ein erstes Ermittlungsmodul (62), das zum Ermitteln eines Zielserviceszenarios des Zielanwendungsszenarios, das basierend auf einer entsprechenden Beziehung zwischen Umgebungsinformationen und den Serviceszenarien des Zielanwendungsszenarios den momentanen Umgebungsinformationen entspricht, ausgebildet ist,
ein Abfragemodul (63), das zum Abfragen einer Servicebetriebslogik des Zielserviceszenarios in einer globalen Konfigurationsdatei unter Verwendung des Zielanwendungsszenarios und des für die Abfrage ermittelten Zielserviceszenarios, wenn das Zielserviceszenario nicht mit einem momentanen Serviceszenario des Zielanwendungsszenarios übereinstimmt, ausgebildet ist,
wobei die globale Konfigurationsdatei
ein oder mehrere Anwendungsszenarien
und für jedes des einen oder der mehreren Anwendungsszenarien,
mindestens ein Serviceszenario,
eine Servicebetriebslogik jedes Serviceszenarios, wobei die Servicebetriebslogik jedes Serviceszenarios für die Darstellung eines Bedienvorgangs, dessen Ausführung für die Umsetzung des Serviceszenarios erforderlich ist, verwendet wird, und
eine logische Beziehung zwischen den Serviceszenarios umfasst,
wobei jedes der einen oder der mehreren Anwendungsszenarien ein vollständiges globales Szenario eines vollständigen Prozesses ist und die Serviceszenarien spezifische Unterteilungsszenarien unter dem globalen Szenario sind;
ein Generierungsmodul (64), das zum Generieren eines Zielanwendungsprogramms basierend auf der Servicebetriebslogik des abgefragten Zielserviceszenarios ausgebildet ist; und
ein Modul zum automatischen Fahrbetrieb (65), das zum Durchführen einer automatischen Fahrbetriebssteuerung der Baumaschinen basierend auf dem Zielanwendungsprogramm ausgebildet ist.

13. Elektronisches Gerät, **gekennzeichnet durch** das Umfassen:
eines Speichers (74) und eines Prozessors (71), die miteinander in einer Kommunikationsverbindung sind, wobei der Speicher (74) Computeranweisungen speichert und der Prozessor (71) das Verfahren zum automatischen Fahrbetrieb für die Baumaschinen nach einem der Ansprüche 1 bis 11 durch Ausführen der Computeranweisungen ausführt.

14. Computerlesbares Speichermedium, **dadurch gekennzeichnet, dass** das computerlesbare Speichermedium Computeranweisungen speichert, und die Computeranweisungen verwendet werden, um einen Computer zum Ausführen des Verfahrens zum automatischen Fahrbetrieb für die Baumaschinen nach einem der Ansprüche 1 bis 11 zu veranlassen.

15. Intelligentes vernetztes kollaboratives Fahrbetriebsystem für Baumaschinen, **gekennzeichnet durch** das Umfassen:
mindestens einer bordeigenen Rechenplattform (20) von Baumaschinem, die zum Ausführen des Verfahren zum automatischen Fahrbetrieb für die Baumaschinen nach einem der Ansprüche 1 bis 11 ausgebildet ist; und
eines Zielservers (10), der mit mindestens der einen bordeigenen Rechenplattform der Baumaschinen in Kommunikationsverbindung ist, und zum Aktualisieren eines intelligenten Zielinferenzmodells basierend auf von jeder der Baumaschinen gesammelten Umgebungsdaten und Fahrbetriebssteuerungsergebnisdaten, und zum Ausgeben eines aktualisierten, intelligenten Zielinferenzmodells an die Baumaschinen entsprechend dem intelligenten Zielinferenzmodell ausgebildet ist.

## Revendications

1. Procédé de commande de conduite automatique pour machines de chantier, appliqué à une plateforme informatique embarquée sur les machines de chantier,
**caractérisé en ce que** le procédé comprend :
identifier un scénario d'application cible, le scénario d'application cible comprenant plusieurs scénarios de service ;
acquérir des informations environnementales actuelles sur les machines de chantier ;
déterminer un scénario de service cible du scénario d'application cible correspondant aux informations environnementales actuelles, sur la base d'une relation correspondante entre les informations environnementales et les scénarios de service du scénario d'application cible ;
interroger, lorsque le scénario de service cible est incompatible avec un scénario de service actuel du scénario d'application cible, une logique opérationnelle de service du scénario de service cible dans un fichier de configuration global en utilisant le scénario d'application cible et le scénario de service cible déterminé pour l'interrogation,
dans lequel le fichier de configuration global comprend
un ou plusieurs scénarios d'application,
et pour chacun desdits un ou plusieurs scénarios d'application,
au moins un scénario de service,
une logique opérationnelle de service de chaque scénario de service, dans laquelle la logique opérationnelle de service de chaque scénario de service est utilisée pour représenter une action opérationnelle devant être exécutée pour mettre en œuvre le scénario de service ; et
une relation logique entre les scénarios de service,
dans lequel chacun des un ou plusieurs scénarios d'application est un scénario global complet d'un processus complet, et les scénarios de service sont des scénarios de subdivision spécifiques dans le cadre du scénario global ;
générer un programme d'application cible basé sur la logique opérationnelle du service interrogée du scénario de service cible ; et
effectuer le contrôle automatique de la conduite des machines de chantier en fonction du programme d'application cible.

2. Procédé selon la revendication 1, **caractérisé en ce que** la génération du programme d'application cible sur la base de la logique opérationnelle du service du scénario de service cible interrogé comprend :
déterminer un premier plugin d'algorithme et une première interface de communication requis par le scénario de service cible sur la base de la logique opérationnelle du service interrogée du scénario de service cible ; et
assembler le premier plugin d'algorithme et la première interface de communication pour générer le programme d'application cible, dans lequel
lorsque le premier plugin d'algorithme qui s'appuie sur un modèle d'inférence intelligent existe, le procédé comprend en outre : charger un premier modèle d'inférence intelligent correspondant au premier plugin d'algorithme dans une zone de cache.

3. Procédé selon la revendication 2, **caractérisé en ce que** l'assemblage du premier plugin d'algorithme et de la première interface de communication pour générer le programme d'application cible comprend :
acquérir un programme d'application actuel du scénario de service actuel, le programme d'application actuel étant obtenu en assemblant un deuxième plugin d'algorithme et une deuxième interface de communication ; et
ajuster, sur la base d'une différence entre une logique opérationnelle de service actuelle du scénario de service actuel et la logique opérationnelle de service du scénario de service cible, le programme d'application actuel en utilisant le premier plugin d'algorithme et la première interface de communication pour déterminer le programme d'application cible, dans lequel, lorsque le premier plugin d'algorithme qui s'appuie sur le modèle d'inférence intelligent existe, l'ajustement comprend en outre : effectuer un ajustement du modèle d'inférence intelligent sur le premier plugin d'algorithme qui s'appuie sur le modèle d'inférence intelligent.

4. Procédé selon la revendication 1, **caractérisé en ce que** la détermination du scénario de service cible du scénario d'application cible correspondant aux informations environnementales actuelles sur la base de la relation correspondante entre les informations environnementales et les scénarios de service du scénario d'application cible comprend :
déterminer le scénario de service cible du scénario d'application cible correspondant aux informations environnementales actuelles sur la base d'une relation correspondante entre les informations d'image et les scénarios de service du scénario d'application cible ;
et/ou
déterminer le scénario de service cible du scénario d'application cible correspondant aux informations environnementales actuelles sur la base d'une relation correspondante entre les informations de position et les scénarios de service du scénario d'application cible.

5. Procédé selon la revendication 1, **caractérisé en ce qu'**il comprend en outre :
acquérir des informations environnementales initiales lorsque la machine de chantier démarre ;
déterminer un scénario de service initial réel correspondant aux informations environnementales initiales sur la base d'une relation correspondante entre les informations environnementales et les scénarios de service ;
vérifier le scénario de service initial réel en utilisant un scénario de service initial dans le scénario d'application ;
émettre un rappel d'alarme lorsque la vérification échoue ; et
effectuer un contrôle automatique de la conduite des machines de chantier sur la base des informations environnementales initiales lorsque la vérification réussit.

6. Procédé selon la revendication 1, **caractérisé en ce que** la détermination du fichier de configuration global est basée sur une caractéristique de scénario d'une carte de scénario cible du scénario d'application cible.

7. Procédé selon la revendication 6, **caractérisé en ce qu'**un mode de détermination du fichier de configuration global comprend :
déterminer la carte de scénario cible du scénario d'application cible en réponse à la sélection d'une carte de scénario du scénario d'application cible dans une interface de réglage de la fonction de scénario ;
déterminer au moins un scénario de service et la logique opérationnelle de chaque scénario de service sur la base de la caractéristique de scénario de la carte de scénario cible ; et
déterminer le fichier de configuration global en réponse à une configuration logique entre les scénarios de service.

8. Procédé selon la revendication 7, **caractérisé en ce que** la détermination de la carte de scénario cible du scénario d'application cible en réponse à la sélection de la carte de scénario du scénario d'application cible dans l'interface de réglage de fonction de scénario comprend :
afficher une interface de configuration de scénario d'exploitation en réponse à une opération de configuration d'exploitation sur le scénario d'application cible, dans lequel l'interface de configuration de scénario d'exploitation comprend une zone d'exploitation du scénario d'application cible et une position de chaque machine de chantier dans la zone d'exploitation ;
afficher une interface de réglage de la fonction scénario de la machine de chantier cible en réponse à une opération de sélection de la machine de chantier cible dans l'interface de configuration des scénarios d'exploitation ;
déterminer une carte de scénario initiale en réponse à une opération de sélection d'une carte de scénario dans l'interface de réglage de la fonction scénario ; et
mettre à jour, sur la base des données collectées de chaque machine de chantier à une position actuelle, la carte de scénario initiale afin de déterminer la carte de scénario cible.

9. Procédé selon la revendication 2, **caractérisé en ce que** l'exécution de la commande de fonctionnement de conduite automatique sur la machine de chantier sur la base du programme d'application cible comprend :
acquérir, lorsque le premier plugin d'algorithme est implémenté en s'appuyant sur un modèle d'inférence intelligent cible, les données d'entrée du modèle d'inférence intelligent cible ;
charger un fichier modèle du modèle d'inférence intelligent cible basé sur un moteur d'inférence intelligent afin d'inférer les données d'entrée et de déterminer un résultat d'inférence ; et
effectuer le contrôle automatique de la conduite en fonction du résultat de l'inférence.

10. Procédé selon la revendication 9, **caractérisé en ce que** le chargement du fichier modèle du modèle d'inférence intelligent cible, sur la base du moteur d'inférence intelligent, afin d'inférer les données d'entrée et de déterminer le résultat d'inférence comprend :
charger, lorsqu'un modèle d'inférence intelligent cible mis à jour émis par un serveur cible est acquis, un fichier modèle du modèle d'inférence intelligent cible mis à jour, sur la base du moteur d'inférence intelligent, afin d'inférer les données d'entrée et de déterminer le résultat de l'inférence, dans lequel le modèle d'inférence intelligent cible mis à jour est déterminé par le serveur cible après la mise à jour du modèle d'inférence intelligent cible sur la base des informations environnementales collectées par chaque machine de chantier et des données de résultat de contrôle de conduite.

11. Procédé selon la revendication 1, **caractérisé en ce que** le procédé est mis en œuvre sur la base d'un système logiciel déployé sur la plateforme informatique embarquée de la machine de chantier, la capacité de calcul du système logiciel étant fournie par une première carte de calcul, et le procédé comprend en outre :
détecter les performances de fonctionnement de la première carte de calcul ; et
afficher des informations indiquant la nécessité d'ajouter une nouvelle carte de calcul lorsque les performances de fonctionnement ne répondent pas aux exigences ;
acquérir, lorsqu'il est détecté qu'une deuxième carte de calcul nouvellement ajoutée existe, une chaîne d'outils de compilation croisée de la deuxième carte de calcul ;
effectuer une analyse des fonctionnalités de la chaîne d'outils de compilation croisée afin de déterminer un outil de compilation cible de la deuxième carte de calcul ;
appeler l'outil de compilation cible dans une bibliothèque d'outils de compilation prédéfinie pour compiler le système logiciel et générer un fichier compilé du système logiciel ; et
déployer le fichier compilé sur la deuxième carte de calcul, de sorte que la deuxième carte de calcul fournisse une capacité de calcul pour le système logiciel.

12. Dispositif de conduite automatique pour machines de chantier, **caractérisé en ce qu'**il comprend :
un module d'acquisition (61), configuré pour identifier un scénario d'application cible, le scénario d'application cible comprenant plusieurs scénarios de service, et acquérir des informations environnementales actuelles des machines de chantier ;
un premier module de détermination (62), configuré pour déterminer un scénario de service cible du scénario d'application cible correspondant aux informations environnementales actuelles sur la base d'une relation correspondante entre les informations environnementales et les scénarios de service du scénario d'application cible ;
un module d'interrogation (63), configuré pour interroger, lorsque le scénario de service cible est incompatible avec un scénario de service actuel du scénario d'application cible, une logique opérationnelle de service du scénario de service cible dans un fichier de configuration global en utilisant le scénario d'application cible et le scénario de service cible déterminé pour l'interrogation,
dans lequel le fichier de configuration global comprend
un ou plusieurs scénarios d'application,
et pour chacun desdits un ou plusieurs scénarios d'application,
au moins un scénario de service,
une logique opérationnelle de service de chaque scénario de service, dans laquelle la logique opérationnelle de service de chaque scénario de service est utilisée pour représenter une action opérationnelle devant être exécutée pour mettre en œuvre le scénario de service, et
une relation logique entre les scénarios de service,
dans lequel chacun des un ou plusieurs scénarios d'application est un scénario global complet d'un processus complet, et les scénarios de service sont des scénarios de subdivision spécifiques dans le cadre du scénario global ;
un module de génération (64), configuré pour générer un programme d'application cible basé sur la logique opérationnelle du service du scénario de service cible interrogé ; et
un module de commande de conduite automatique (65), configuré pour effectuer une commande de conduite automatique sur la machine de chantier basée sur le programme d'application cible.

13. Dispositif électronique, **caractérisé en ce qu'**il comprend :
une mémoire (74) et un processeur (71), qui sont en communication l'un avec l'autre, dans lequel la mémoire (74) stocke des instructions informatiques, et le processeur (71) exécute le procédé de commande de conduite automatique pour la machine de chantier selon l'une quelconque des revendications 1 à 11 en exécutant les instructions informatiques.

14. Support de stockage lisible par ordinateur, **caractérisé en ce que** le support de stockage lisible par ordinateur stocke des instructions informatiques, et les instructions informatiques sont utilisées pour amener un ordinateur à exécuter le procédé de commande de conduite automatique pour la machine de chantier selon l'une quelconque des revendications 1 à 11.

15. Système d'exploitation intelligent en réseau pour la conduite collaborative pour machines de chantier, **caractérisé en ce qu'**il comprend :
au moins une plateforme informatique embarquée (20) d'une machine de chantier, configurée pour exécuter le procédé de commande de conduite automatique de la machine de chantier selon l'une quelconque des revendications 1 à 11 ; et
un serveur cible (10), en communication avec au moins une plateforme informatique embarquée de la machine de chantier, et configuré pour mettre à jour un modèle d'inférence intelligent cible sur la base des informations environnementales collectées par chaque machine de chantier et des données de résultat de commande de fonctionnement de conduite, et pour émettre un modèle d'inférence intelligent cible mis à jour vers la machine de chantier correspondant au modèle d'inférence intelligent cible.
